(19) Europäisches Patentamt
European Patent Office
Office européen des brevets

(11) Publication number : **0 118 187 B1**

# (12) EUROPEAN PATENT SPECIFICATION

(45) Date of publication of patent specification : **14.09.94 Bulletin 94/37**

(51) Int. Cl.$^5$ : **G06F 3/037,** G06F 15/40

(21) Application number : **84300515.8**

(22) Date of filing : **27.01.84**

## (54) Menu-based natural language understanding system.

(30) Priority : **28.01.83 US 462151**

(43) Date of publication of application : **12.09.84 Bulletin 84/37**

(45) Publication of the grant of the patent : **14.09.94 Bulletin 94/37**

(84) Designated Contracting States : **DE FR GB**

(56) References cited :
**1982 INTERNATIONAL ZURICH SEMINAR ON DIGITAL COMMUNICATIONS, MAN-MACHINEINTERACTION, 9th-11th March 1982, Zurich, Proceedings, IEEE Cat. no. 82CH1735-0, pages 153-158, H. G. Fischer et al.: "User friendly interaction with an integrated data base information retrieval system"**
**COMPUTER, vol. 13, no. 7, July 1980, pages 43-48, IEEE, Long Beach, California, US, M.S. Fox et al.: "The automated dictionary"**
**IEEE TRANSACTIONS ON PATTERN ANALYSIS AND MACHINE INTELLIGENCE, vol. PAMI-4,no. 2, March 1982, pages 221-223, IEEE, New York, US, J.W. Smith et al.: "A microcomputer system for processing natural languages"**

(56) References cited :
**PHILIPS TECHNICAL REVIEW, vol. 38, no. 10, 1978/79, pages 269-284, Eindhoven, NL, "PHLIQA 1, a question-answering system for data-base consultation in natural English"**

(73) Proprietor : **TEXAS INSTRUMENTS INCORPORATED**
**13500 North Central Expressway**
**Dallas Texas 75265 (US)**

(72) Inventor : **Tennant, Harry R.**
**3537 Ridgemoor Dr.**
**Garland, Texas 75042 (US)**
Inventor : **Ross, Kenneth M.**
**2800 Meadow Creek**
**Bedford, TX 76021 (US)**
Inventor : **Saenz, Richard M.**
**9323 Amberton Pkwy.**
**Dallas, TX 75243 (US)**
Inventor : **Miller, James R.**
**2303 Bengal Lane**
**Plano, TX 75023 (US)**
Inventor : **Thompson, Craig W.**
**1312 Sylvan Circle**
**Plano, TX 75074 (US)**

(74) Representative : **Abbott, David John et al**
**Abel & Imray**
**Northumberland House**
**303-306 High Holborn**
**London, WC1V 7LH (GB)**

**EP 0 118 187 B1**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

BACKGROUND AND SUMMARY OF THE INVENTION

The present application relates to a computer input interface system.

Providing access to computer systems with natural language is a very important step towards the construction of computer systems which are easy to use. However, although "ease of use" is currently a central goal of builders of computer systems, and although research into the construction of natural language interfaces has gone on for over fifteen years (resulting in the construction of many prototype systems), natural language interfaces are not in common use today. The reason for this is that the natural language interfaces that have been constructed to date are quite difficult to use. This is because the current state of the art is such that all systems that are constructed have many limitations in coverage. That is, they can only understand a small subset of all possible natural language queries. The construction of a system which can understand all (or even a substantial part) of English, or any other natural language, is impossible today. This is likely to remain impossible for many years to come.

Thus, in order for current natural language systems to prove useful, the user communities that utilize these systems will have to be able to adapt to system limitations. They will have to learn the limitations of the system and thereby restrict their input to only the subset that can be understood by the system. Unfortunately, all previous systems required users to type queries and thereby required the user to learn and adapt to the limitations of the natural language system, users have been unable to learn these limitations and have therefore been unable to successfully utilize language interfaces, high failure rates result, even for simple queries, in traditional systems.

The primary application for natural language interfaces has been to natural language database query systems. For all natural language systems, the user has been required to type his question into the keyboard of a computer terminal. When the entire question had been input, the natural language interface began processing the input string. Processing resulted either in an answer to the user's query or a response that indicates that the query was not understood.

Natural language interfaces that have been constructed employ a grammar which characterizes the class of acceptable input strings. The process of taking a sentence and determining whether it is grammatical, given a grammar, is called parsing. For example, if S is assigned to be the designated root symbol, the sentence "The lazy cat ate greedily" is ruled grammatical by the above grammar because the following tree is the result of parsing that sentence with the above grammar.

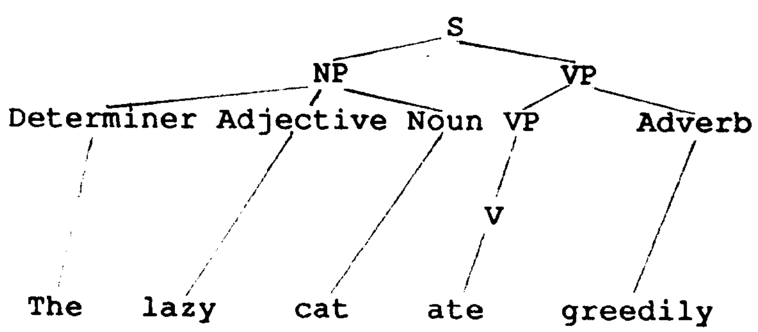


A wide variety of grammar formalisms and parsing algorithms have been used. Most of these grammar formalisms can, however, be classified under the general heading of augmented context-free grammars. This means the basic grammar rules are rules of a context-free grammar but each context-free rule has, associated with it, augmentations which give the grammar added power. These augmentations generally access attributes (and sometimes values) of the nodes of the context-free rules.

Context-free grammars consist of an alphabet of symbols and a finite set of rules containing these symbols. Symbols are classified as being either terminal symbols or non-terminal symbols. Terminal symbols are those symbols which appear in the lexicon (or dictionary) and thereby classify words according to categories. For example, terminal symbols commonly used in linguistic work are shown to the left of the colon in the example lexicon below.

| | |
|---|---|
| Determiner: | the,a |
| Adjective: | lazy,red |
| Noun: | cat,book |

Verb: ate,saw
Adverb: slowly, greedily

Nonterminal symbols are those symbols which are not terminal symbols or special symbols such as "t", ":" and "!MORE" referred to below.

Rules are of the form A ---> B1 ... Bn (where n > 0). The Bn's are either terminal or nonterminal symbols. A is a nonterminal symbol. As a simple example, consider the following set of rules:

S ---> NP VP
NP ---> Determiner Adjective Noun
VP ---> VP Adverb
VP ---> Verb

Given the lexicon shown earlier, the above grammar will determine whether sentences containing words in the lexicon are grammatical or ungrammatical, once a nonterminal symbol is assigned as the designated symbol for the grammar. The designated symbol indicates what a sentence is.

A parser then accesses this grammar to produce a parse tree (or parse trees for ambiguous input) for the input string. This parse tree is then translated into an expression (or set of expressions) which represent the meaning of the input string and which are interpretable by the computer system for which the interface has been built.

Natural language parsers are generally based on one of several parsing algorithms that have been employed for parsing context-free grammars. First, a context-free parse is performed. Then, the augmentation rules are used. In some systems, a partial context-free parse is done, then whatever augmentations that are relevant to that portion of the parse are done. This procedure is then iterated until a complete parse is found.

The only extensive evaluation of a natural language interface was performed for the PLANES system, a natural language database query system that accessed a military aircraft maintenance database in natural language. The results of this evaluation show quite clearly why natural language interfaces are not in common use today. About 1/3 of the queries input to the system by users were not understood, even though the tasks assigned to these users was to solve problems that had been specifically designed to correspond to relatively straight-forward queries.

Additionally, all of the queries that were input to the system were simple queries, containing about 6 or 7 words. Often this meant that many queries were needed in order to solve each problem assigned the user. More complex queries, which could have greatly reduced the amount of input required, were never attempted, even though the system had the ability to handle some of these. The reason that more complex queries were not attempted appears to be that the high failure rate for the simple queries gave the users little confidence that more complex ones would work. Thus, the users never attempted to formulate complex queries.

Another reason that natural language interfaces are not in common use today is the large amount of time it has traditionally taken to construct a natural language interface. Current technology is such that each interface must be constructed on a case by case basis for each application. Efforts taking from 10 to 30 man years per application are not uncommon. Thus only applications that can justify such a large expenditure of manpower are candidates for possible applications. However, given the quality of the system results, the effort has not proved to be worthwhile.

In the journal "Computer", vol. 13 (1980), July issue, pages 35-48, [there is] an article by M.S. Fox et al, entitled "The Automated Dictionary" [in which is] describes a computer-based device which, in addition to providing definitions of words entered by the user, also can perform searches for synonyms and antonyms, provide spelling and grammar assistance, and word games.

The Proceedings of the International Zurich Seminar on "Digital Communications - Man-machine interaction", 9-11 March 1982, Zurich, have the IEEE Catalogue No. 82 CH 1735-0 and on pages 153-158 of the Proceedings there is a paper entitled "User-friendly interaction with an integrated data-base information retrieval system" by H.G. Fischer and A. Zeidler. This paper describes the operation of a model of an information retrieval system in which access to the stored data is provided by means of a dialogue between the user and the system. The dialogue may use menus presented by the system to guide the user as to the input which the system requires to select the correct data for output. Other forms of dialogue mentioned are command language dialogue, natural language dialogue and a dialogue with masks.

It is an object of the present invention to provide a system for interfacing with a computer, which does not require the user to know any computer language whatsoever.

It is a further object of the present invention to provide a computer interface system which does not require large amounts of time for a user to become accustomed to using the interface systems.

It is a further object of the present invention to provide a computer interface system which permits natural language inputs, but prevents the user from offering any ill-formed inputs.

It is a further object of the present invention to provide a computer interface system which makes system limitations obvious to a user, and all sentences that can be input understood by the computer.

It is a further object of the present invention to provide a natural-language understanding computer interface system which does not require a large and complex grammar to be specified.

It is a further object of the present invention to provide a computer interface system, in which users can direct natural language queries to a relational database system without knowing how to type.

The present invention solves the problem of providing USABLE natural language interfaces to computer systems. The present invention permits users who are unaware of system constraints and who are completely naive regarding computer operation to provide intelligible inputs to a computer system. Users need not learn or remember system limitations. It also enhances experienced users to interact in a clearer and simpler way. Additionally, both implementation time and processing time for natural language interfaces are decreased.

According to the present invention there is provided

a computer having a menu-based input system to enable an operator to make a multi-word input by selecting and then entering words or phrases from each of a plurality of sequentially presented menus, the menus presented after the first menu being determined by the selected entry or entries made from at least one previous menu,

CHARACTERISED IN THAT

the computer includes

means for storing a lexicon containing words and/or phrases acceptable to the computer together with the different linguistic categories (for example, noun, phrase, intransitive verb, adjective, adverb, determiner, etc.) to which the words and/or phrases belong,

means for storing representations of the rules of grammar of a sub-set of a natural language, the grammar rules defining the proper formation of structures in the natural language composed of the different linguistic categories, and

parsing means responsive to the linguistic category or categories of the or each word or phrase previously selected from a menu and entered and, when more than one such word or phrase has been entered, to the order in which the previously selected words and/or phrases have been entered, to parse using the grammar rules the partial sentence formed by the word or words and/or phrase or phrases selected and entered up to that time, the parsing being performed each time a word or phrase is added to the partial sentence and in all ways that are valid within the grammar rules, the parsing means being arranged to derive from the parsing of a partial sentence the linguistic categories of all words or phrases that could follow the partial sentence within the grammar rules, and to select from the stored lexicon words and/or phrases belonging to the or each linguistic category derived by the parsing means to form the next menu for presentation to the operator,

whereby the multi-word input made by the operator is constrained to form a sentence satisfying the grammar rules of the natural language,

means for enabling the operator to enter an indication that the words and/or phrases that have been entered form a complete sentence,

and means for translating a parsed complete sentence into a command executable by the computer.

The mode of user interaction with the system is a primary novel aspect of this invention. In the present invention, the user is not required to type a well-formulated input to the natural language understanding system, but rather is instead presented with a set of menus. The user successively chooses words or phrases (or numbers, etc.) from the menus to construct his input. At any point in the construction of a natural language input sequence by the user, only a subset of the set of menus is active. In the embodiments to be described these active menus have white backgrounds with black printing and inactive menus have dark backgrounds and white printing. The user is only allowed to choose from active (or white) menus. Items are selected from menus by using a mouse. The mouse is moved on the table and a pointer moves in response to this on the screen. When the pointer is over the desired item, that item can be selected by pushing a button on the mouse.

Additionally, at various points in the construction of natural language input, only a subset of the items in the menu will be active. Those items in an active menu that are not active at a particular point will not appear in the menu at that point. Thus, at any particular point in the construction of natural language input, only those words or phrases that could legally come next will be available for the user to select. Thus, sentences which cannot be processed by the natural language system can never be input to the system, giving a 0% failure rate.

The present invention will be described with primary reference to the presently preferred embodiment, wherein data base queries and updates are addressed to a relational data base. Thus, the present invention provides a method whereby natural language inputs can be limited to any restricted set of inputs, as long as the restricted set of inputs can be formally described by a context-free grammar (subject to minor limitations). The present invention is a pioneer invention in the area of computer systems capable of understanding natural language inputs, and accordingly has a tremendous scope of applications.

A prototype of the system according to the preferred embodiment, is coded in LISP, and has been demonstrated on a LISP machine from LMI Incorporated. It employs the algorithm to be described and uses the Lisp Machine's software for creating the menus required and manipulating them as described above. The prototype implementation is a natural language database query system which accesses the parts-suppliers database described in Date (1975), p. 79. This database is stored in relational form in a relational database management system that was implemented on the Lisp Machine. The Lisp code (Lisp machine) for the parser and for the construction and manipulation of the menus is included in the Appendices below. The grammar, which characterizes the allowed queries to the database is also included. However, as will be obvious to those skilled in the art, the present invention can alternatively be realized using a wide variety of other physical systems, and the key ideas of the invention can also be translated into other programming languages than LISP. For example, another implementation of the present invention, which is presently under development, realizes the present invention on a Texas Instruments Professional Computer, instructed by source code which is written in "C".

The presently preferred method of user presentation is a CRT screen, on which the various menus are displayed, together with a mouse which moves a cursor on the screen. However, as is obvious to those skilled in the art, a wide variety of other actual I/O devices can be used. For example, a flat graphics display (e.g. electroluminescent) could be used instead of a CRT, and user control of the cursor could be accomplished, e.g., by a joystick or by voice recognition.

The natural language inputs are parsed using a parser which is generally similar to that disclosed in the 1981 dissertation of Ken Ross entitled "Parsing English Phrase Structure". It should be noted that the particular parser used in the preferred embodiment is not necessary to the invention, other parsers can be used. Numerous parsers have been disclosed in the prior art. However, the presently-preferred embodiment uses a parser which will be described in great detail, starting with the operation of the parser itself. A simplified version of the parser will first be described, and then the modifications which permit word-at-a-time parsing and prediction according to the present invention will be described.

As discussed above, the end result which the present invention achieves is to permit the user to input well-understood sentences in a convenient language, which is preferably a subset of a natural language (such as English). According to this invention, after the user has input each successive word of a sentence, the set of all possible next words which could form the continuation of a grammatical sentence is displayed to the user, so that he needs only to select one of the possible next words. (More broadly, some of the possible inputs can be lumped together as a category, so that one of the displayed items would be, e.g., "(specific number)", as will be discussed later.)

In general, this is accomplished by parsing partial inputs received from the user as they are received, so that the parser generates the set of possible functional descriptions which could be the next element in a legal input, and displays a set of words (corresponding to these functional descriptions of possible next elements). Thus, the end result of the operation, after the user has input a complete sentence, is a parsed command which is in accordance with the predefined grammar, and therefore can be trivially translated into an executable instruction, as will be discussed below.

The preferred parser can be specified in terms of nonstandard Turing machine instructions, which operate on the upper elements of an alpha stack and a beta stack in accordance with the current state of the upper elements of the two stacks. The topmost elements of these stacks are represented as an ordered pair such as (XY, ZW), where X is a string variable corresponding to the upper elements of the alpha stack, Y is the next element of the alpha stack after X, Z represents the upper elements of the beta stack, and W is the next element of the beta stack. The parser rules can then be stated as:

1. If one of the rules of the grammar which can be applied is of the form A---> $V_1V_2... V_n$, then we map a condition ($V_1$ Y, X) onto (Y, $V_2...V_n$ t A X), and we attach $V_1$ as a node beneath A. However, this rule is applicable only if X is in the set of "non terminals", that is if X itself represents a partial parsing tree rather than a first-level input, such a word or the immediate classification of a word (e.g. noun, adjective, determiner, etc.). The symbol "t" is merely a placeholding symbol, which is used in this formalism to permit proper application of the succeeding parser rules. Thus, this first partial rule stores the possibility that $V_1$ is the beginning of a group which can be parsed under a higher level node A (e.g., the possibility that, if $V_1$ is a determiner, it is the beginning of a noun phrase such as "the parts"). Where an element is associated beneath another element, this provides one step in building up the tree of associated nodes which will eventually form a complete parse. The result of parsing a sentence is one or more parse trees if the input is a valid sentence. If the input is not a sentence, parsing produces no parse trees. Thus, a sample of a completed parse, in a grammar roughly corresponding to English, might be as follows:

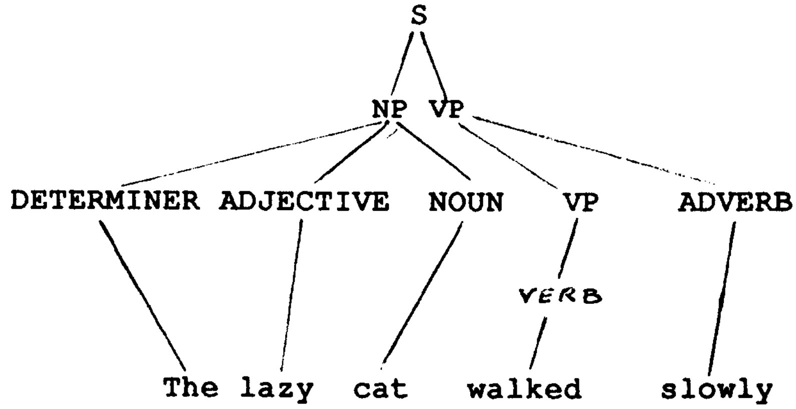


The first association is always a direct translation from a specific word (e.g. "cat") to its directly associated category ("noun"). However, it should be preliminarily noted here that the categories used need not be as broad as familiar English-language parts of speech, but, at least for database-query applications, are preferably modified to include some semantic information. Thus, in the presently preferred embodiment, categories such as "number-noun phrase", "worker-noun phrase", "operation-noun phrase", "job card-noun phrase", and others are used.

Intuitively, parser Rule 1 means that, where a rule of grammar might be applicable to a topmost element on stack alpha ($V_1$), that element is removed from the top of stack alpha, and stack beta is pushed down, successively, with the hypothetical parent node of $V_1$ (together with $V_1$ associated below it), with a place holding symbol "t", and with the remaining symbols which would be required by the possibly-applicable rule of grammar ($V_2 \ldots V_n$). For convenience, we restate parser rule 1 again:

Rule 1: If one of the available rules of grammar applied can be stated as A---> $V_1$ $V_2 \ldots V_n$;
and if a nonterminal X is on top of stack beta; then ($V_1$ Y, X) maps onto

$$(Y,\ V_2\ \ldots\ V_n\ t\ \underset{\diagdown V_1}{A}\ X).$$

2. The second rule of the parser shows how the place holding symbol t is used to indicate that a perfected partial parse can be transferred from stack beta to stack alpha:

Rule 2: If the place holding symbol t is on top of the stack beta, and is immediately followed by a nonterminal symbol A, the place holding symbol t is deleted and the nonterminal symbol A is transferred from the top of stack beta over to stack alpha:

$$(X,\ t\ \underset{\substack{|\\ n}}{A}\ Y) \text{ maps onto } (\underset{\substack{|\\ n}}{A}\ X, Y).$$

Intuitively, the allocation of functions between stacks alpha and beta is that stack alpha contains only parse trees or well-formed subparts of parse trees, whereas stack beta is used to hold partially formed subparts of parse trees.

3. The third rule is used to determine when a necessary portion of the elements required to complete a parse has been found. The formal statement is:

Rule 3:

$$(\underset{P\ \ n}{\overset{}{B}}\ Z, B \ldots tQ) \text{ maps onto } (Z, \ldots t\underset{\substack{|\\ B\\ P\ \ n}}{Q})$$

The operation of the parser is initiated by loading the string of words to be parsed into stack alpha, followed by a numeral sign, and by loading the higher level symbol corresponding to the root node of the tree to be constructed, followed by a numeral sign, on stack beta. That is, where (as is usual) the parser is organizing strings of words into properly parsed sentences, the symbol which indicates a complete sentence in the grammar (in rules such as S---> NP VP) is loaded onto stack beta. Thus, the initial condition of the procedure can be represented as ($W_1$ $W_2$ ... $W_n$#, S#).

A successful parse has been found when the final condition of the two stacks is (S#, S#). In this case, the nodes below the S on the alpha stack provide the desired complete parse. If the root node (i.e. the object of the parsing) is not a sentence parse, but, for example, a noun phrase parse, then the condition indicating a successful parse would be correspondingly different, e.g. (NP#, NP#).

When no rule is applicable, the parsing path represents a bad parse, and the parser must retrace and follow a different parsing path.

When more than one parser rule can be applied, and/or when more than one rule of the grammar can be applied through parser rule 1, alternative parsing paths must be followed. Eventually, all of the alternative parsing paths will result in either successful of unsuccessful parses. The set of successful parses represents the output of the parser, after completion of the parsing process. This has substantial advantages in the present invention, as described below.

An example of the operation of this simplified version of a parsing procedure will now be given. Suppose, for example, that the grammar to be applied is as follows:

(3.4) Grammar S ---> A B
S ---> A B C
A ---> A C
A ---> x
B ---> C B
B ---> z
C ---> y

In this example, the input string is "xyz", which is to be parsed as an "S".

## TABLE 1

```
Parser Rule        Stack Alpha     Stack Beta          Grammar Rule

                   x y z #         S #

Rule (1)           y z #           t A S #             A --> x
                                     |
                                     x

Rule (2)           A y z #         S #
                   |
                   x

Rule (1) applicable 3 Ways:
See continuations 1.1, 1.2 and 1.3

Cont. 1.1          y z #           B t S S #           S --> AB
Rule (1)                               /
                                     A
                                     |
                                     x

Rule (1)           z #             t C B t S S #       C --> y
                                     |      /
                                     y    A
                                          |
                                          x

Rule (2)           C z #           B t S S #
                   |                /
                   y               A
                                   |
                                   x
```

**TABLE 1**

| Parser Rule | Stack Alpha | Stack Beta | Grammar Rule |
|---|---|---|---|
| Rule (1) | z # | B t B B t S S # 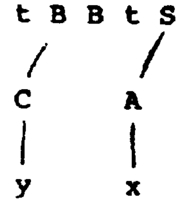 | B ---> CB |
| Rule (1) | # | t B B t B B t S S # 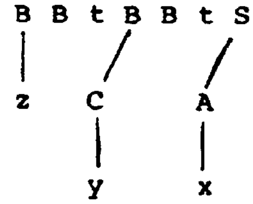 | B ---> z |
| Rule (2) | B # 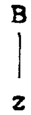 | B t B B t S S # 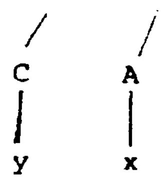 | |
| Rule (3) | # | t B B t S S # 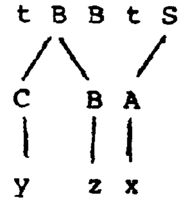 | |
| Rule (2) | B # 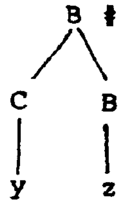 | B t S S # 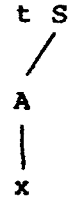 | |

## TABLE 1

| Parser Rule | Stack Alpha | Stack Beta | Grammar Rule |
| --- | --- | --- | --- |
| Rule (3) | # | t S S # 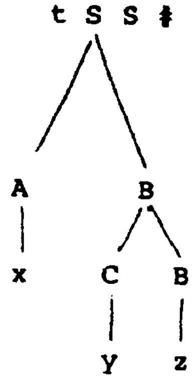 | |
| Rule (2) | S # 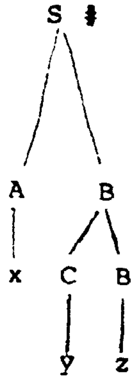 | S # | |

PARSE FOUND

Cont. 1.2

| Parser Rule | Stack Alpha | Stack Beta | Grammar Rule |
| --- | --- | --- | --- |
| Rule (1) | y z # | B C t S S # 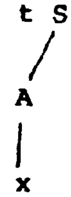 | S --> A B C |

## TABLE 1

| Parser Rule | Stack Alpha | Stack Beta | Grammar Rule |
|---|---|---|---|
| Rule (1) | z # | t C B C t S S #<br>y A<br>x | C ---> y |
| Rule (2) | C z #<br>y | B C t S S #<br>A<br>x | |
| Rule (1) | z # | B t B B C t S S #<br>C A<br>y x | B ---> CB |
| Rule (1) | # | t B B t B B C t S S #<br>z C A<br>y x | B ---> z |
| Rule (2) | B #<br>z | B t B B C t S S #<br>C A<br>y x | |

**TABLE 1**

| Parser Rule | Stack Alpha | Stack Beta | Grammar Rule |
| --- | --- | --- | --- |
| Rule (3) | # | 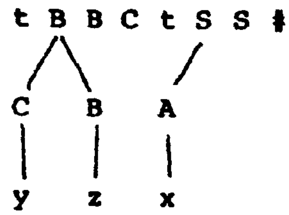 | |
| Rule (2) | 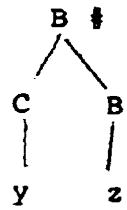 | 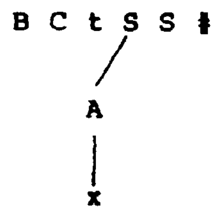 | |

## TABLE 1

| Parser Rule | Stack Alpha | Stack Beta | Grammar Rule |
| --- | --- | --- | --- |
| Rule (3) | # | 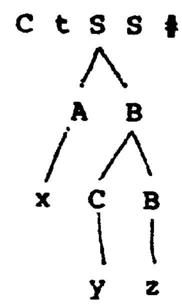 | |

BAD PATH - NO INSTRUCTIONS APPLY

| Parser Rule | Stack Alpha | Stack Beta | Grammar Rule |
| --- | --- | --- | --- |
| Cont. 1.3<br>Rule (1) | y z # | 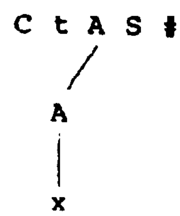 | A --> AC |
| Rule (1) | z # | 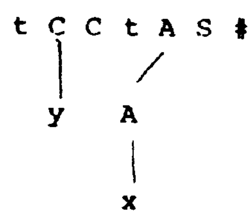 | C --> y |
| Rule (2) | 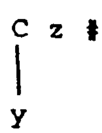 | 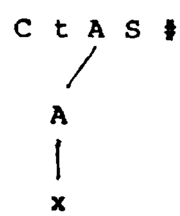 | |

Rule (1) and Rule (3) both applicable -
See continuations 2.1 and 2.2

# TABLE 1

```
Parser Rule     Stack Alpha     Stack Beta                 Grammar Rule

Cont. 2.1
Rule (1),$      z #             B t B C t A S #            B --> CB
                                   /     /
                                  C     A
                                  |     |
                                  y     x

Rule (1)        #               t B B t B C t A S # B --> z
                                  |     /     /
                                  z    C     A
                                       |     |
                                       y     x

Rule (2)        B #             B t B C t A S #
                |                  /     /
                z                 C     A
                                  |     |
                                  y     x

Rule (3)        #               t B C t A S #
                                 / \   /
                                C   B A
                                |   | |
                                y   z x

Rule (2)        B #             C t A S #
               / \                 /
              C   B               A
              |   |               |
              y   z               x

BAD PATH - NO INSTRUCTIONS APPLY
```

## TABLE 1

| Parser Rule | Stack Alpha | Stack Beta | Grammar Rule |
|---|---|---|---|
| Cont 2.2 - Rule (3) | z # | t A S # 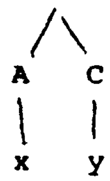 | |
| Rule (2) | A z # 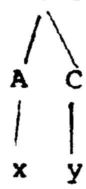 | S # | |

Rule (1) applicable 3 ways - See continuations 3.1, 3.2 and 3.3

| Parser Rule | Stack Alpha | Stack Beta | Grammar Rule |
|---|---|---|---|
| Cont 3.1 Rule (1) | z # | B t S S # 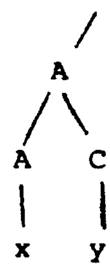 | S --> AB |

**TABLE 1**

| Parser Rule | Stack Alpha | Stack Beta | Grammar Rule |
|---|---|---|---|
| Rule (1) | # | 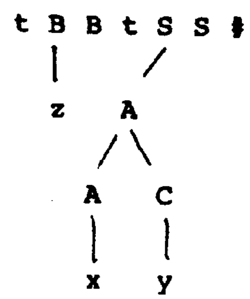 | B ---> z |
| Rule (2) | 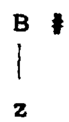 | 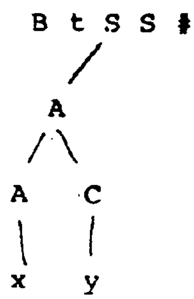 | |
| Rule (3) | # | 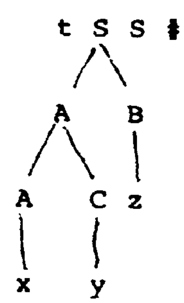 | |

## TABLE 1

| Parser Rule | Stack Alpha | Stack Beta | Grammar Rule |
|---|---|---|---|
| Rule (2) | S # 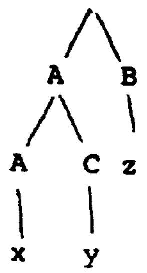 | S # | |
| PARSE FOUND | | | |
| Cont. 3.2<br>Rule (1) | z # | B C t S S # 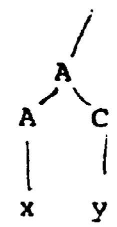 | S --> ABC |
| Rule (1) | # | t B B C t S S # 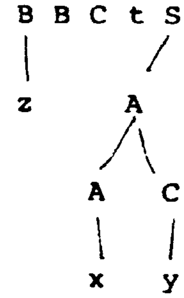 | B --> z |
| Rule (2) | B # 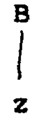 | B C t S S # 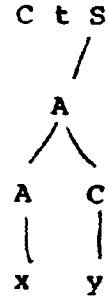 | |

## TABLE 1

| Parser Rule | Stack Alpha | Stack Beta | Grammar Rule |
|---|---|---|---|
| Rule (3) | # | C t S S # 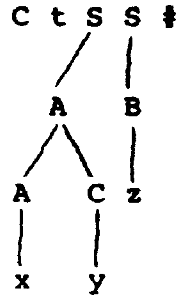 | |
| BAD PATH - NO INSTRUCTIONS APPLY | | | |
| Cont. 3.3<br>Rule (1) | z # | C t A S # 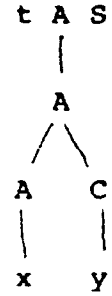 | A --> AC |
| Rule (1)$ | # | t B C t A S # 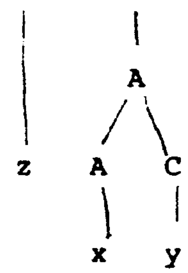 | B --> z |

TABLE 1

| Parser Rule | Stack Alpha | Stack Beta | Grammar Rule |
|---|---|---|---|
| Rule (2) | 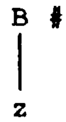 | 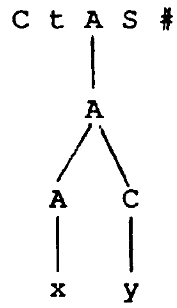 | |

BAD PATH - NO INSTRUCTIONS APPLY

DONE

The foregoing carefully-worked-out example shows in detail the operation of a parser based on a context-free grammar. It can easily be seen from this example that the formal manipulation rules as set forth above translate very simply into programmable operations. For example, the final status of stack beta, in the very last step of the preceding worked-out example, could be easily represented in Lisp by a list formatted, e.g., as follows:

(C t (A (A (A x) (C y))) S).

Note that the # is not required in the Lisp implementation, since an empty list is easily tested for.

The parser used in the present invention must be able to produce the set of items which can come next, in addition to creating a parse tree. In order to do this, the parser must be able to begin parsing as soon as the first word or phrase is input.

Note that not only does the ability to parse a word (or phrase) at a time enable the parser to be modified so that it can predict what can come next (as will be described below), but the ability to parse a word at a time also reduces parsing time. With traditional parsers where the entire sentence must be input before any parsing is done, no parsing can be done while the user formulates and inputs his query. However, if processing begins as soon as the first word or phrase is input, then the time it takes for a user to input his sentence can be put to productive use. This increases the perceived speed of any parser since work can proceed as the user is typing and composing his input. Thus, rather than there being a delay of several seconds or more after the sentence is input, the parse is completed almost instantaneously after input is terminated because most of the work was done before the input was completed.

Although the parser set forth in the 1981 Ross publication does have the ability to begin parsing immediately upon input of the first word or phrase, an improved parser will now be described. In addition, for consistency with the published literature, the formalism of the parser will now trivially be altered from the 2-stack formalism used above to a 3-stack informal Turing machine formalism. The formalism differs from the previous formalism in that the incomplete parse trees which were formerly held below the place holding symbol "t" in stack beta will now be regarded as held separately in a gamma stack. Thus, the presently preferred embodiment uses the improved parser, as will now be set forth.

The improved parser is termed the <u>MSBT</u> (Modified Selective Bottom to Top) parser and is formally characterised in terms of Turing machine instructions which apply to three stacks: alpha, beta and gamma. These instructions are of the following form, where A,B,C,D,E, and F can be arbitrary strings of symbols from the terminal and nonterminal alphabet.

(A,B,C) ---> (D,E,F) if "Conditions"

This is to be interpreted as follows:

If A is on top of stack alpha,

B is on top of stack beta,

C is on top of stack gamma,

and "Conditions" are satisfied

then replace A by D, B by E, and C by F.

Given this interpretation of the Turing machine instruction, an example of the MSBT parser uses the following Turing machine instructions. To begin parsing a sentence, the input string to be parsed is put on stack alpha, the root symbol of the parse tree to be constructed is put on stack beta and ø is put on stack gamma. ("ø" indicates that there are no contents to the stack.) The rules of operation of the MSBT parser are as follows:

(1) (V1,X,Y) ---> (ø,V2...Vn t X,A Y)

if A ---> V1 V2...Vn is a rule of the phrase structure grammar, X is in the set of nonterminals, Y is anything, and A can be reached from X. Whether A "can be reached from X" is shown in the reachability matrix, as will be discussed below. Briefly, the reachability matrix excludes impossible word sequences, such as "the the", among other things.

(2) (X,t,A) ---> (A X,ø,ø)

if A is in the set of nonterminals

(3) (B,B,Y) ---> (ø,ø,Y)

if B is in the set of nonterminals or terminals.

(4) (X,( C1 C2...Cn ),Y) ---> (X,C1 C2...Cn,Y)

(5) (X,( C1 C2...Cn ),Y) ---> (X,ø,Y)

For all i, Ci = ( Cj Cj+1...Cp ) or

{CnCn+1...Cm) or X

If X is in the set of terminals.

(6) (X, { C1 X,Y) ---> (X, {  ,Y)

(7) (X, { C1 X,Y) ---> (X,C1 :,Y)

if X not = }

(8) (X, : } ,Y) ---> (X,ø,Y)

(9) (X, { C1 } ,Y) ---> (,C1,Y)

(10) (X, : C1,Y) ---> (X, :,Y)

where : is a special symbol which is neither a terminal or a nonterminal symbol.

C1 is a Ci type variable as defined earlier.

(Rules 4 through 10 are added to permit use of grammar rules which contain parentheses and curly brackets. These elements are notationally convenient. Curly brackets indicate that exactly one of the elements within the brackets is to be inserted. Parentheses indicate that one or more (or none) of the elements in parentheses can be inserted. Ci-type variables are added merely to keep track of nested brackets and parentheses although this function is easily accomplished in the Lisp implementation)

If no rules can be applied, the root symbol is on top of stack beta, the same root symbol is on top of stack alpha, and stack gamma is empty, then a valid parse has been found. If no rules can be applied and the above conditions are not true, then that path has ended without producing a valid parse of the input string. To obtain all valid parses of the input string, all paths must be pursued until they either produce a valid parse or end without producing a parse.

The rules stated thus far define a recognition procedure. It will determine whether or not a given string can be parsed into a tree dominated by the specified root node. The following addition is required to enable the parser to produce the parse tree(s) for the input string.

When (1) is applied, attach V1 beneath A.

When (3) is applied, attach the B on alpha B as the right daughter of the top symbol on gamma.

The parse tree will now appear on stack alpha, instead of just the root symbol.

The MSBT parser is called selective because it employs a reachability matrix to eliminate bad parse paths before trying them. The reachability matrix indicates whether X can dominate A where A is on a left branch. The reachability conditions are satisfied if X can dominate A in this configuration.

The reachability matrix is a Boolean matrix, which contains a logical value for each pair of nodes (N,M) in the grammar to indicate whether any legal parse tree could have node N as a leftmost daughter of node M. The construction of a full reachability matrix is preferably accomplished as set forth in Warshall and in Baker: See "A Note on Multiplying Boolean Matrices," Communications of the ACM (Feb. 1962) p. 102, and "A Theorem on Boolean Matrices," Journal of the Association for Computing Machinery, Volume 9, Page 11 (1962), which are hereby incorporated by reference, Briefly, the grammar rules are used to construct a matrix for immediate reachability, that indicates which nodes can be immediate daughter nodes of which other nodes. This matrix is then multiplied by itself repeatedly, until it stabilizes, that is until further multiplication of the final matrix by the immediate reachability matrix produces no further change in the final matrix. This final matrix is itself then the reachability matrix. However, in the presently preferred embodiment, the full reachability matrix is not compiled, but instead a list is compiled, for each node in the grammar, listing the other leftmost daughter nodes which can be dominated by that node.

The statement of the parser given above is neutral with respect to the control structure that the procedure employs. However, as noted, the parser set forth above must be modified for use in the present invention. The embodiments of the present invention use a breadth-first control structure, which carries a parse as far as possible for each word of the input string. Thus, after inputting the nth word, a complete parse up to that word has been performed.

The breadth-first function will be described in slightly more detail. To do this, a depth-first control structure must be described first.

A depth-first strategy pushes one state as far as it will go. To do this, apply one of the rules that are applicable, get a new state, and then apply one of the applicable rules to that new state. Continue this until either no rules apply or a parse is found. If no rules apply, it was a bad parse path. If a parse is found, it is one of possibly many parses for the sentence. In either case, continue on and pursue all other alternative paths by backtracking to the last choice point, picking another applicable rule, and continuing in the manner described earlier. By doing this until the parser has backed up through all possible choice points, all parses of the sentence will be found.

To parse breadth first and introduce the ability to begin parsing given only one word of the input, the input word and the special symbol !MORE are put on stack alpha and parsing is begun along a parse path using the parser rules set out above. When no further rules can be applied and !MORE is on top of stack alpha, the contents of the beta and gamma stacks are saved and the parser backtracks to the last place the parse paths were split. Once all backtracking is completed, the next word, followed by !MORE, is put on alpha and parsing begins again with a set of states, each containing the new input word on stack alpha and the or one of the saved beta-gamma pairs, containing the contents of stacks beta and gamma. This procedure is then iterated until all words have been processed.

It is straightforward to add a well-formed state table to a parser modified in the way just described. Before beginning a parse with new input and a set of beta- gamma pairs, the beta-gammas can be compared and those with common subgoals can be merged. This has also been implemented in the parser used for the present invention, also known as the NLMenu System.

The ability to predict the set of possible nth words of a sentence, given the first n-1 words of the sentence is the final modification necessary to enable this parser to be used for menu-based natural language understanding. Fortunately, this feature can be added in a straightforward way. Given any beta-gamma pair representing one of the parse paths active n-1 words of the sentence have been input, it is possible to determine the set of words that will allow that state to continue. To do this, look at the topmost symbol on stack beta of the beta-gamma pair. This represents the most immediate goal of that parse state. To determine all the words that can come next, given that goal, the set of all nodes that are reachable from that node as a left daughter must be determined. Fortunately, this information is easily obtainable from the reachability matrix discussed earlier. Once the set of reachability nodes is determined, all that need be done is find the subset of these that can dominate the lexical material. (Nodes that dominate others are above those others in a parse tree). Now, if this is done for all of the beta-gamma pairs that resulted after parsing the first n-1 words and the union of the sets that result is taken, the resulting set is a list of all of the lexical categories that could come next. The list of next words is easily determined from this, e.g. through the lexicon.

The most important feature of this procedure is that it can predict the set of possible terminal symbols that could be the nth input item, if it has completed parsing up to the (n-1)th input item. It is this facility that enables the proper menus and proper items in those menus to be displayed so that the next input item can be chosen from a menu. To enable the parser to compute this information, for each potential mother node, the list of all possible daughters that could be left corners must be computed. This can be done either directly by accessing the phrase structure rules or indirectly by first computing the reachability matrix and then looking at all pairs X and Y such that X can dominate Y as a left daughter. The preferred embodiment uses the first method. For each mother node of the rules, a list is compiled of all nodes that mother node can dominate as a left corner. This is done by running through all rules and compiling a list.

The process by which an unambiguous parse is translated into an executable machine command (or an output according to some constrained system, for other applications) will now be described.

Associated with every word in the lexicon, there is a translation. This translation is a portion of the meaning of a sentence in which the word appears. In order to properly combine the translations of the words in a sentence together, there is a rule associated with each context-free rule indicating the order in which the translations of the symbols on the right side of the arrow of a context-free rule are to be combined. These rules are parenthesized lists of numbers where the number 1 refers to the first item after the arrow, the number 2 to the second, etc.

For example, for the rule X --> A B C D, a possible rule indicating how to combine translations might be (3 (1 2 4)). This rule means that the translation of A is taken as a function and applied to the translation of B as its argument. This resulting new translation is then taken as a function and applied to the translation of 4 as its argument. This resulting translation is then the argument to the translation of 3, which is a function.

In general, the translation of the leftmost number applies to the translation of the number to its right as the argument. The result of this then is a function which applies to the translation of the item to its right as the argument. However, parentheses can override this as in the example above.

Translations that are functions are of the form "lambda x ... x ...". When this is applied to an item like "c" as the argument, "c" is plugged in for every occurrence of x after the "lambda x" and the result is just the expression with the "lambda x" stripped off of the front and the substitution made.

For example, consider the sentence "John hit Mary". A reasonable meaning might be (hit John Mary) If- "John" is assigned to the lexical category NP and assigned the meaning "John", and "Mary" is assigned to the lexical category NP and assigned the meaning "Mary", and if "hit" is assigned to the lexical category V and assigned the meaning "lambda x lambda y (hit y x)", the following rules will yield the desired meaning.

S --> NP VP
(2 1)
VP --> V NP
(1 2)

To see why this is so, note that the meaning of the subtree VP would be the result of applying the meaning of the V to the meaning of the NP because of the rule (1 2). The result of applying "lambda x lambda y (hit y x)" to Mary is "lambda y (hit y Mary)". The meaning of the entire tree is the meaning of the VP, via the function "lambda y (hit y Mary"), applied to the meaning of the NP, John. This function applied to this argument produces "(hit John Mary)".

The foregoing discussion shows how inputs are parsed in accordance with a predefined grammar and lexicon. It should be noted that the present invention is applicable to constraining natural language inputs in accordance with any system which can be formally represented by a comparable grammar and lexicon. That is, the present invention is not applicable solely to data base query systems, but can be used to generate well-formed executable machine commands in any machine language using natural language input. Moreover, the present invention is not applicable only to semantic grammar-defined systems, but can also be used with syntactics-grammar defined systems. Moreover, the present invention is not applicable only to provide executable machine commands as outputs, but can be used to provide formally constrained outputs of any type whatsoever, from a natural language input, as long as a correspondence between the desired set of formally constrained outputs and a natural language subset which has a well-formed grammar can be defined.

The class of grammars currently used by the parser is context-free grammars (or CFG's). Any arbitrary context-free grammar is permitted, with two minor exceptions, namely those grammars containing two classes of rules. These are rules of the form X --> null and sets of rules that generate cycles, for example, A --> B, B --> C, C --> D and D --> A. The problem with the first class of rules is that they make it very difficult for the predictive version of the algorithm to determine all and only those words that can come next in a sentence. The problem with the second class of rules is that they result in an infinite number of possible parse trees for a given sentence.

The elimination of the second class of rules causes no difficulty and does not impair a grammar writer in any way. way. The elimination of the first class of rules causes a small inconvenience in that it prevents grammar writers from using the existence of null nodes in parse trees to account for certain unbounded dependencies like those found in questions like "Who do you think I saw?" which are said in some linguistic theories to contain a null noun phrase after the word "saw". However, alternative grammatical treatments, not requiring a null noun phrase, are also commonly used. Thus, the prohibition of such rules merely requires that these alternative grammatical treatments be used.

Simpler and smaller grammars would result if the class of grammars allowed was extended to allow augmentations to be associated with the context-free rules. The process of automatically generating a grammar for relational database applications would be greatly simplified by this extension in the class of grammars as well. This would result in increased efficiency throughout the system.

A very general mechanism which will assign features to nodes of trees, based on other features of the nodes of that tree, was proposed in Knuth (1968). Petrick (1973) adopts this mechanism, using somewhat different notation. The work of these researchers has been built upon in the design of the feature percolation mechanism described here. The mechanism is a constrained version of Knuth's.

Knuth's mechanism enables feature names (attributes in Knuth's terms) and their values to be passed up and down a tree. Associated with each phrase structure rule, there is a set of rules which indicates how to pass the features around. These will be referred to as feature percolation rules. Knuth allows the value of a feature for any of the nodes expressed in a phrase structure rule to be set either to the value of a feature of any of the nodes of that phrase structure rule or to the value of a function applied to the values of features of any of the nodes expressed in that phrase structure rule. Once a feature value is assigned for a particular node, it does not change.

For a structure like the one given below, the features of Nom1 can be determined by either other features of the node itself, the features of the nodes below it (Nom2 and S), the features of the node above it (NP) or the features of its sister node (det).

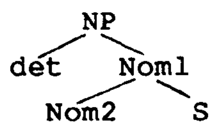


In turn, the features of these nodes could be determined by their mother node, daughter nodes, or sister nodes. This in effect means that information from anywhere in the tree can be transmitted to the nodes which determine the features of Nom1.

Utilizing Petrick's notation to illustrate this, the following feature percolation rules could be associated with the phrase structure rule given below.

NP --> det Nom
FEATURE1(0) = F1 (FEATURE2(0),FEATURE3(2))
FEATURE3(2) = F2(FEATURE4(1))
FEATURE4(1) = FEATURE4(2)

The numbers 0,1, and 2 indicate the nodes represented in the phrase structure rule. 0 is the node to the left of the arrow, the NP node. 1 is the node immediately to the right of the arrow, the det node. 2 is the second node to the right of the arrow, the Nom node. In general, N will be the Nth node to the right of the arrow (for N > 0).

The first feature rule is interpreted as setting the value of FEATURE1 for the NP node to the result of applying the function F1 to the values of FEATURE2 of the NP node and FEATURE3 of the Nom node.

Grammars constrain the value of a feature of a node to only be determined by values of features present on nodes that that node dominates (nodes that dominate others are above those others in a tree).

This means that the feature values of the nodes of any subtree can only depend on the feature values within that subtree. This is accomplished by restricting feature percolation rules so that features will only percolate up the tree, not down. Thus, only percolation rules in which a feature of the 0 node is being determined by a function applied to the values of the features of nodes 1 through N or by the value of a feature of one of nodes 1 through N (where this feature percolation rule is associated with a phrase structure rule with N elements following the arrow) are permitted.

Augmentation rules of another class are used as well. These check the features of nodes and filter out ill-formed structures based on the values of these features. These rules are called feature blocking rules and will be written as conditions on the values of the features of the nodes to the right of the arrow. Petrick's notation will be utilized for these rules as well, but here it should be interpreted somewhat differently. In general, blocking rules will state that the value of a feature of nodes 1 through N or the value of a function applied to the values of the features of nodes 1 through N must be equal to either the value of a feature of nodes 1 through N or the value of a function applied to the value of features of nodes 1 through N. These rules are not to be interpreted as assigning feature values. They are, instead, well-formedness conditions which indicate whether a subtree is valid, according to the grammar.

As an example of the feature mechanism in action, consider a hypothetical language with the following properties.

I- Verbs and Subject NP's agree in Number and Person
II- Nouns and their Determiner agree in Number and Gender
III- Adjectives and Nouns agree in Gender
IV- The language is SVO and in Noun Phrases, the order of constituents is Determiner-Adjective-Noun

The following phrase structure rules and feature rules characterize the above situation if the values of the feature PERSON range over the numbers 1,2, and 3 (indicating first, second and third person), the values of NUMBER range over SING and PLUR, and the values of GENDER range over MASC and FEM.

S ---> NP VP

Blocking

PERSON(1) = PERSON(2)
NUMBER(1) = NUMBER(2)

Percolation

none
VP ---> V NP

Blocking

none

Percolation

PERSON(0) = PERSON(1)
NUMBER(0) - NUMBER(1)
NP ---> det Adj N

Blocking

NUMBER(1) = NUMBER(3)
GENDER(1) = GENDER(3)
GENDER(2) = GENDER(3)

Percolation

NUMBER(0) - NUMBER(3)
PERSON(0) = PERSON(3)

An example of a tree which could be produced by these rules follows.

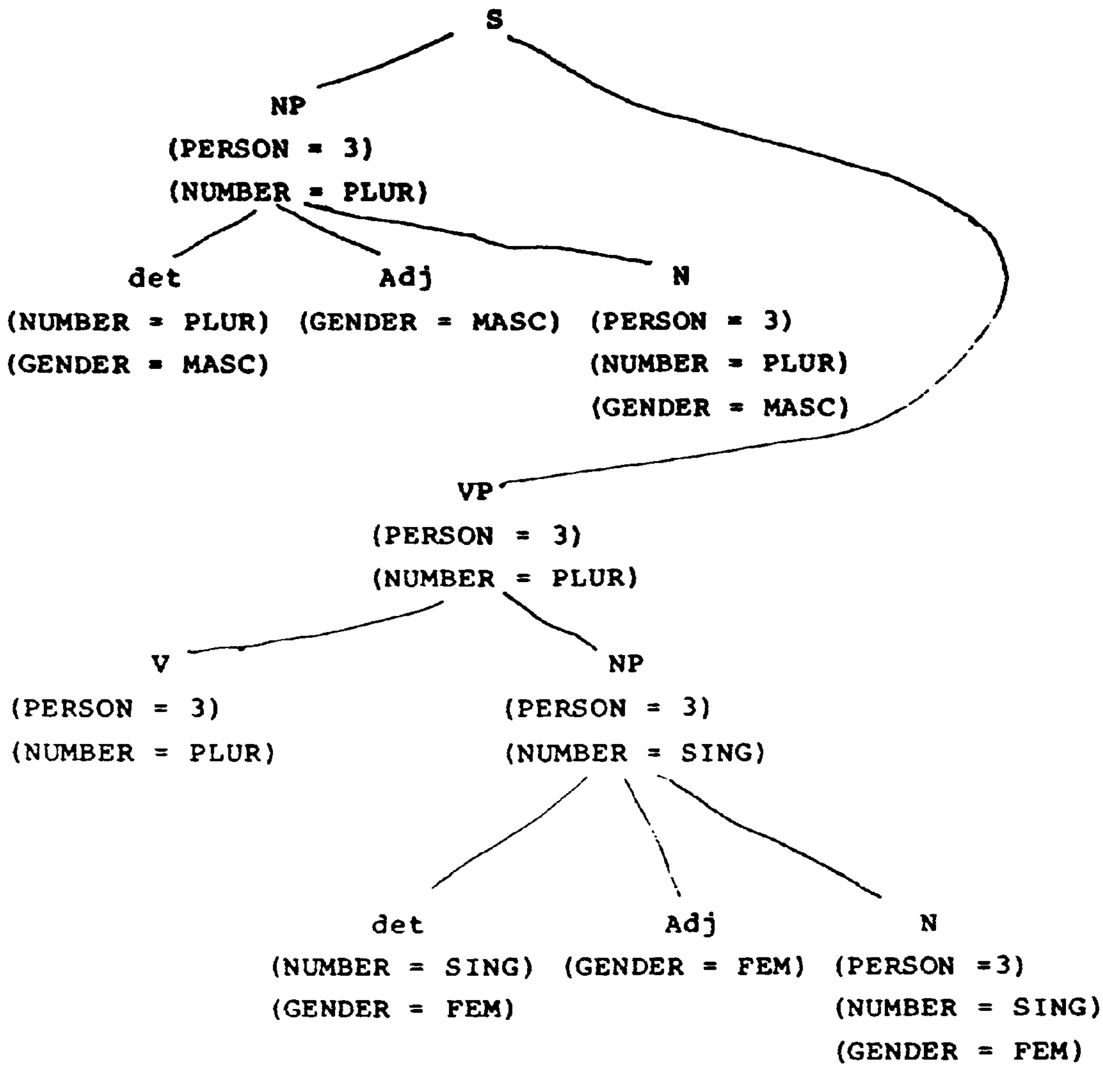


To do predictive parsing with a grammar like the one described above, in addition to calculating the reachability matrix for the context-free portions of the grammar rules, the percolation and blocking rules must be taken into account. There are several possible ways to do that.

One possibility is to construct a much larger reachability matrix which contains feature information. This can be done by having one entry in the reachability matrix for every possible set of attributes and values that can be associated with each of the symbols. Thus, in the example above, rather than just having an entry indicating whether NP can dominate det, one is required for whether NP with PERSON = 2, NUMBER = SING and GENDER = FEM can dominate det with PERSON = 3, NUMBER = SING and GENDER = FEM, one is required for whether NP with PERSON = 2, NUMBER = SING and GENDER = FEM can dominate det with PERSON = 2, NUMBER = SING and GENDER = FEM, etc. This information can be calculated from the percolation and blocking rules associated with the context-free rules that are traversed to determine if det can be reached from NP in the context-free case.

Except for very small grammars, this first solution would require a prohibitive amount of storage for the reachability matrix. A second solution is to do the same calculation at the point where the reachability information is required rather than prestoring the answer in the reachability matrix. This would take quite a bit of calculation at run time.

A third choice, and the one seen as most promising, is to calculate the reachability matrix for the context-free version of the rules and then to associate an equation or set of equations with each item in the matrix. In the example above, these equations can be calculated from the percolation and blocking rules associated with the context-free rules that are traversed to determine if det can be reached from NP in the context-free rules. When the values of the features of the two nodes for which reachability matrix information is required are known, they are plugged into this equation. The result of this equation will be either true or false indicating reachability.

It is the ability to determine the set of terminals that can come next that differentiates the method of the invention from others and it is this ability that enables the proper items and menus to be displayed, thus ensuring a 0% failure rate for natural language input to the system.

A sacrifice has been made to achieve this 0% failure rate, however. The preferred parser is only able to employ context-free grammars and cannot use the augmented context-free grammars that were discussed earlier. This is predicting the items that can come next. The present invention can be applied to augmented grammars as discussed above, but the capability is not included in the presently-preferred embodiment. Thus, the less powerful context-free grammars must be used. For a natural language system that needed to handle all paraphrases (as traditional systems must), context-free grammars are unacceptable. They do not have enough power to characterize a fragment of natural language that is very large. However, for a system that only needs to characterize one way of saying things, context-free grammars are adequate. So, for our system, the sacrifice is not very great. Additionally, a parser that could process input using augmented context-free grammars would necessarily be slower than the parser we employ. Thus, this "sacrifice" actually results in our system being able to parse faster.

An example of the appearance of natural language menus to the software user will now be described, with reference to the accompanying drawings, of which:

Figure 1 shows an example of the menu initially presented to the user, where the user is attempting to extract information from a baseball-statistics database;

Figure 2 shows a further step in the operation of the system shown in Figure 1, wherein a different window menu is active;

Figure 3 shows a further step in the user construction of a database query in the system of Figure 1;

Figure 4 shows a further step in the construction in the same query, showing user selection of an expert item, namely the item "(specific batter teams)";

Figure 5 shows a further step in the construction of the same query, wherein the expert item selected by the user has called for a pop-up expert window;

Figure 6 shows a further step in construction of the same input query, after the expert has finished its function;

Figure 7 shows a further step in the construction of the same query, wherein a numerical comparison operator is being selected;

Figure 8 shows a pop-up number expert, to facilitate user entry of numerical inputs;

Figure 9 shows a further step in the entry of the same query;

Figure 10 shows how the show query command translates a user's query into an executable machine command;

Figure 11 shows a sample actual response to the user query;

Figure 12 shows the appearance of a "mouse-sensitive" item (in this case, the number "0.25") within the query already constructed;

Figure 13 shows an example of a different query, in which the user has input an ambiguous query;

Figure 14 shows the system's response to attempted execution of an ambiguous query, such as that shown in Figure 13;

Figure 15 shows the pop-up held expert; and

Figure 16 shows a sample of the initial menu appearance for access to a different database.

Figure 1 shows a sample menu as initially presented to the user. Note that the arrow seen in the middle of the blank space at the bottom indicates the position of a cursor. This cursor is controlled by a mouse. A previous query can be seen above the blank space where the cursor is found.

A new query will now be constructed. As seen in Figure 1, the only initially active window of the menus is the menu at the upper left, which permits "find", "delete", or "insert" as the initial word of a command. By moving the mouse to one of these words, for example "find", and depressing a button on the mouse, one of the possible entries is selected.

As shown in Figure 2, a different window or windows will now be highlighted, and the selection process continues as shown in the following figures.

As selection proceeds, not only does the set of active windows change, but also the contents of each window changes. This is merely a graphic expedient to clearly present the set of active items to the user, and many other graphic presentation formats could be used instead.

Note that in Figure 3 a parenthesis has been selected as one of the items. By this means, queries having greater logical structure can be unambiguously indicated by the operator. Note also that, as shown in Figure 3, only the attributes which could properly apply to a batter are highlighted and available for selection.

The items displayed on the menu to the user, and which can be selected by the user, need not be only words or phrases. The user can be offered inputs such as words, phrases, numbers (either unconstrained, or constrained), direct typed input (e.g. to add a new entry to a database), direct graphics input (e.g. by indicating a position on a map) or other versatile possibilities. For example, the items displayed will typically include such entries as "(specific part no)" or "(specific supplier)". When the user mouses one of these, he is then presented, in a little window, with a list of the names of specific suppliers, which is gathered from the database in real time. Thus, these non-word items displayed on the menu add a great deal of versatility and user convenience to this system.

These versatile displayed items are referred to generally as "experts". The implementation of these experts, once their function has been defined, is quite simple. The critical part which should be noted is that, in translation from a partial parse to a list of displayed items, the lexicon must be modified to generate non-word items at this point. Thus, for example, when the partial parse of the instant sentence entry requires that the next word entered be either an adjective or a noun, a pseudo-lexical entry for the appropriate expert item must be added if the expert item is to be displayed, in addition to entries in the lexicon which might class Jones brothers as a "noun-supplier", an additional entry to class the expert item "(specific supplier)" as a "noun-supplier" must also be added. Note that, once the expert item has been designated by the user, this designation can merely operate as a call to the expert subroutine. In addition, the use of experts does not affect the final translation of the natural language input into machine commands, since each expert concludes its function and retires immediately before the next word is selected. That is, where, e.g., a map is provided to the user, and the user moves the pointer to select a specific latitude and longitude on the map, the entry which will appear in the partial sentence being parsed would be something like "whose latitude is 50° west and whose longitude is 40° north".

In addition, where a very large number of items can be chosen from next, an expert can be used to display subcategories of the possible next items. Experts can also be used to remind the user of limitations in the database. For example, in a parts database, if every part has a weight less than five pounds, an expert for part weight can be used which constrains the numerical part weight input to be less than five pounds.

The experts can also serve as a convenient aid for the user's memory, so that, for example, where the user of a baseball statistics database cannot remember how to spell "Yastrzemski", he can simply call up an alphabetical list of players, or simply a list of players on the appropriate team. Thus, the expert in effect permits sub-queries to the database to be transacted in the midst of formulating a larger query, and thus save much time. In addition, the expert can be used, e.g., to select another input channel. For example, if a peripheral system accessory included electronic output from a scale, an expert item in a parts data-base could be indicated as "(specific weight read from scale #7)".

In Figure 4, note that an expert item appears under attributes, that is the item "(specific batter teams)". When this item is moused, a pop-up expert window appears (Fig. 5), with a menu of specific batter-team attributes which can be selected. (The list of Houston and Texas is short, due to the limited extent of the actual database supported by the example shown in these pictures.) Note also that the pop-up window also contains two commands for "abort" and "do it." When one of the entries in the pop-up window is selected, the window function is not terminated until one of these commands is moused, or until some overriding command is moused. After the execute command in the pop-up expert window has been announced, the pop-up window goes away, and the expert performs its function. Note that the output of this expert that is introduced into the sentence being parsed, is merely the sentence element "Houston". (Fig. 6) That is, the expert has no further effect on the sentence structure being parsed after it has performed its function.

In Figure 7, note that numerical comparison operators can be selected.

The pop-up number expert in Figure 8 permits a numerical input to be selected by mousing, rather than by keyboard input. Of course, the expert can also be adapted to permit direct keyboard input.

Note that the expression input would not be well-formed if a sufficient number of right parentheses had not been entered. The way in which the system enforces this constraint is that the execute option is not presented to the user until a well-formed expression (i.e. an expression which can be parsed as a complete sentence) has been presented. Note that the command window in Figures 8 and 9 does not contain the execute command, unlike the command window in Figure 10.

When a well-formed sentence has been entered, the show query command and execute commands appear. The show query command can be used to immediately display the translation of the entered request. When the execute command is moused, the database system executes the access command. Note that, in the presently preferred embodiment, another pop-up window is used to provide the user with options regarding the format of the output presentation.

This process (highlighted or active menu, user selection, parse, new highlighted menu) is then continued, until the user indicates that he is finished with the sentence which he wishes to input. At this time, there is necessarily at least one valid parse tree in storage, as discussed above. However, it is possible that there may be more than one valid parse tree. Thus, for example, a sentence such as "find suppliers who ship parts to suppliers who own airports and who are located in Boston is formally ambiguous, since it is not clear whether the limitation "who are located in Boston" refers to the first set of "suppliers" referred or to the second set of "suppliers". To resolve such ambiguities, a final step in the presently preferred embodiment displays to the user, where more than one valid parse exists at the completion of a sentence input, alternative parsed versions of the input sentence, using indentations to show the relative referents of the dependent clauses. The user then selects between the alternative parses displayed, so that the end product is a single unambiguous parse of an input sentence.

The save query command, if moused, will save the query just executed for future execution of modification. The retrieve query command can then be used, at a later point, to retrieve a previously stored query. The delete query ("DLT. Q's") command deletes a previously stored query. The refreshed command is not currently used. The play query command is a demonstration command, which will play any saved query back in slow motion, as if it were being entered by the user.

The rub out command deletes the last entry. This capability is due to the procedure of storing partially completed parses on the beta and gamma stacks. Thus, for example, if a user inputs a question with an error in it, the question can be edited using the rub out command.

Another editing capability is the following: certain items in the sentence constructed are "mouse-sensitive", i.e. when the mouse is moved near a mouse-sensitive item the mouse-sensitive item suddenly appears boxed. In the presently preferred embodiment, every word or piece of data which has been input with an expert remains mouse-sensitive, and when such a mouse-sensitive piece of data is later moused, the expert reappears, and that piece of data can then be edited.

An example of the appearance of the user-interface after an ambiguous query is shown in Figures 13 and 14. After the user attempts to execute the ambiguous query, a display indicating the possible interpretations of the alternative parses is shown to the user, and the user is required to select one of the parses. The parse thus selected is then executed. The very small grammars which can be used in practicing natural language interface systems according to the present invention have a further advantage that ambiguously parsed inputs can easily be identified, and the ambiguity can itself be explicated and resolved as just described.

Furthermore, implementation time is greatly decreased because the grammars required can be much smaller, and it is the task of writing a thorough grammar for each application of a natural language understanding system that generally requires much time. Note that the reason larger grammars are not needed is because in traditional systems, every possible paraphrase of a sentence must be understood. The grammar required for this kind of linguistic coverage is quite large. In the present menu-based system, only one paraphrase is needed. The user will be guided to this paraphrase by the menus.

The presently preferred embodiment also includes a help function. The help function is activated by moving the cursor to a specific item on an active menu and depressing the help button, rather than the activate button, on the mouse. When this is done while the cursor is on an active item on the menu, the help expert pops up. (Fig. 15) This expert gives the user a help message, together with a list of all things which could possibly come after the item on which the cursor is currently resting. If the help button is pressed while the cursor is on an inactive portion of the menu, the user is presented merely with the help message, since no item can follow an inactive item.

The menu approach to natural language input has many advantages over the traditional typing approach. As mentioned earlier, every sentence that is input is understood. Thus, a 100% success rate for queries input is achieved. Furthermore, users do not need to know how to type.

In addition to speeding up implementation time, parsing can be done faster as well. Two factors are responsible for this: first, the word by word parse and second, the smaller grammars. Note that parse time is in general a function of grammar size so the smaller the grammar, the faster the parse will be performed.

The fact that the menu-based natural language understanding systems guide the user to the input he desires is also beneficial for two additional reasons. First, confused users who do not know how to formulate their input can receive help in composing it. They only need to recognize their input by looking at the menus. They need not formulate their input in a vacuum. Second, the limitations of the system's conceptual coverage will be apparent. The user will immediately know what the system knows about and what it does not know about.

The application of menu-based natural language for which an implementation has been done is a natural language database query system. There are many, many other potential applications. Below, we list a few that we have thought of. However, virtually any computer system for which a natural language interface would be appropriate would benefit from menu-based natural language input.

i- Language Translator: Allow users to construct sentences using the natural language menu-based input. Since we can greatly restrict the class of sentences they are able to input with menu-based natural language, it will be possible to use relatively straightforward techniques to translate the input. A speech synthesizer could be added to the system and could actually produce the translated sentence in audible speech. Two such devices, one that translates languages X to language Y and one that translate language Y to language X could enable two people who did not speak each others language to carry on a conversation.

ii- Speech Aid for Handicapped People: A much enhanced version of the VOCAID could be made. A person who cannot talk, write or type but who could choose an item from a menu (by pointing with a mouse or some other pointing device) could build a sentence using the menu system. Once a sentence is constructed, it could be rendered by a speech synthesizer. It will have a lot more capability than the VOCAID because a wide range of sentences could be constructed, rather than just a limited number corresponding to the VOCAID-provided templates.

The present application has not attempted to delimit the full scope of possible applications, since the scope of applications of this pioneer invention is vast, and certainly includes a large number of subareas of application which have not been thought of. Thus, the scope of the present invention is subject to many modifications and variations, and is expressly not limited except as recited in the claims.

## Claims

1. A computer having a menu-based input system to enable an operator to make a multi-word input by selecting and then entering words or phrases from each of a plurality of sequentially presented menus, the menus presented after the first menu being determined by the selected entry or entries made from at least one previous menu,

   CHARACTERISED IN THAT

   the computer includes

   means for storing a lexicon containing words and/or phrases acceptable to the computer together with the different linguistic categories (for example, noun, phrase, intransitive verb, adjective, adverb, determiner, etc.) to which the words and/or phrases belong,

   means for storing representations of the rules of grammar of a sub-set of a natural language, the grammar rules defining the proper formation of structures in the natural language composed of the different linguistic categories, and

   parsing means responsive to the linguistic category or categories of the or each word or phrase previously selected from a menu and entered and, when more than one such word or phrase has been entered, to the order in which the previously selected words and/or phrases have been entered, to parse using the grammar rules the partial sentence formed by the word or words and/or phrase or phrases selected and entered up to that time, the parsing being performed each time a word or phrase is added to the partial sentence and in all ways that are valid within the grammar rules, the parsing means being arranged to derive from the parsing of a partial sentence the linguistic categories of all words or phrases that could follow the partial sentence within the grammar rules, and to select from the stored lexicon words and/or phrases belonging to the or each linguistic category derived by the parsing means to form the next menu for presentation to the operator,

   whereby the multi-word input made by the operator is constrained to form a sentence satisfying the grammar rules of the natural language,

   means for enabling the operator to enter an indication that the words and/or phrases that have been entered form a complete sentence,

   and means for translating a parsed complete sentence into a command executable by the computer.

2. A computer according to claim 1 characterised in that the parsing means operates by successively applying any of the following three parser processing rules:

   (i) if the word or phrase currently at the start of the input string is of the linguistic category required by a grammar rule as a first item of a string defining a grammatical structure, then store the grammatical structure defined by the grammar rule, remove the word or phrase from the input string and link it to the grammatical structure defined by the grammar rule, and store the next linguistic category required by the grammar rule to follow the word or phrase removed from the input string;

   (ii) if a complete string of linguistic categories required by a grammar rule defining a grammatical structure is found in the words of the input string, then store the grammatical structure so formed in the input string in place of the words used to form the structure;

(iii) if the linguistic category of the word or phrase currently at the start of the input string is the same as the most recently stored next linguistic category required by the grammar rule applied using parser processing rule (i), then remove the word or phrase from the input string and retrieve the most recently stored next linguistic category from storage, and link the removed word or phrase to the grammatical structure most recently stored by the application or parser processing rule (i); and that

when the input string is incomplete and all the words input up to the time have been linked to one or more grammatical structures, then the most recently stored next linguistic category entered using parser processing rule (i) is used to select words or phrases to be displayed on a menu for presentation to the operator,

the parser applying the parser processing rules in all possible combinations using all appropriate grammar rules so as to explore all possible parse paths, a successful parse being obtained when all the words of the input string are linked to a single grammatical structure in the form of a sentence and an unsuccessful parse being indicated by words of the input string not being linked to a single grammatical structure and no parser processing rules being applicable.

**3.** A computer according to claim 2, characterised in that the parser also uses further processing rules enabling a word in the input string to be identified as belonging to a first plurality of words or phrases of which one only can appear in a succession of words in the input string, or as belonging to a second plurality of words or phrases of which any number from none upwards can appear in succession in the input string.

**4.** A computer according to claim 2 or claim 3, characterised in that the parser includes a reachability matrix in which are recorded indications as to whether or not the different parse paths of an input string could possibly lead to a valid parse of a sentence.

**5.** A computer according to claim 2, 3 or 4, characterised in that the parser uses two memory stacks, initially the input string being stored in a first stack so that the words of the input string appear at the top of the stack in the order in which they occur in the string and a representation of the grammatical structure "sentence" is stored in the second stack, the three parser processing rules then having the following formal statements:-

(i)

```
(V1Y,X)   maps onto   (Y,V2 ---  VntAX)
                                   |
                                   V1
```

where the grammar rule is

A --- $V_1V_2 \ldots V_n$ , the letters represent words, or phrases or grammatical structures, t is a marker symbol and the comma in the formal statements separates the first stack from the second.

(ii)

```
(X,tAY)   maps onto   (AX,Y)
    |                   |
    n                   n
```

(iii)

```
(BZ,BXYtQ)   maps onto   (Z,XYtQ)
/\                              |
P N                             B
                               /\
                               p n
```

**6.** A computer according to any one of claims 2 to 4, characterised in that the parser uses three memory stacks, initially the input string being stored in a first stack so that the words of the input string appear at the top of the stack in the order in which they occur in the string and a representation of the grammatical structure "sentence" is stored in the third stack, the three parser processing rules then having the following formal statements:

(i)

```
(V1, X, Y) maps to (0, V2...VntX, AY)
                                   |
                                   V1
```

where the grammar rule is A $V_1V_2 \ldots V_n$, the letters represent words, phrases or grammatical structures, t is a marker symbol and commas in the formal statements separate the stacks;

(ii) (X, t, A) maps to (AX, 0, 0)

(iii)

```
(B, B, Y) maps to (0, 0, Y)
 |                       /\
 X                      X  B
```

## Patentansprüche

1. Computer mit einem menü-gestützten Eingabesystem, um einer Bedienungsperson die Möglichkeit zu geben, eine Vielfachwort-Eingabe durch Auswählen und anschließendes Eingeben von Wörtern oder Wortverbindungen von jedem von einer Vielzahl von aufeinanderfolgend angebotenen Menüs vorzunehmen, wobei die nach dem ersten Menü angebotenen Menüs durch den ausgewählten Eintrag oder Einträge bestimmt sind, der bzw. die von wenigstens einem früheren Menü vorgenommen wurde bzw. wurden,

   **dadurch gekennzeichnet**, daß

   der Computer folgendes enthält:

   eine Einrichtung zum Speichern eines Lexikons, welches Wörter und/oder Wortverbindungen, die für den Computer annehmbar sind, zusammen mit unterschiedlichen linguistischen Kategorien enthält (z.B. Hauptwort, Wortverbindung, intransitives Verb, Adjektiv, Adverb, Bestimmungswort usw.), zu denen die Wörter und/oder Wortverbindungen gehören,

   eine Einrichtung zum Speichern von Repräsentationen von Grammatikregeln eines untergeordneten Satzes einer natürlichen Sprache, wobei die Grammatikregeln die richtige Bildung und Strukturen in der natürlichen Sprache definieren, die aus den unterschiedlichen linguistischen Kategorien zusammengesetzt ist, und

   eine Parser-Einrichtung, die auf die linguistische Kategorie oder Kategorien des oder jedes Wortes oder der oder jeder Wortverbindung anspricht, das bzw. die früher aus einem Menü ausgewählt und eingegeben worden ist und, wenn mehr als ein solches Wort oder eine solche Wortverbindung eingegeben worden ist, auf die Reihenfolge anspricht, in welcher die früher eingegebenen Wörter und/oder Wortverbindungen eingegeben worden sind, um unter Verwendung der Grammatikregeln den Teilsatz zu parsen, der durch das Wort oder die Wörter und/oder die Wortverbindung oder Wortverbindungen geformt ist, das bzw. die bis zu diesem Zeitpunkt ausgewählt und eingegeben worden ist bzw. worden sind, wobei die Parsing-Operation jedesmal dann durchgeführt wird, wenn ein Wort oder eine Wortverbindung dem Teilsatz hinzugefügt wird und auf alle Weisen, die innerhalb der Grammatikregeln Gültigkeit haben, wobei die Parser-Einrichtung so ausgebildet ist, um aus dem Parsing-Vorgang eines Teilsatzes die linguistischen Kategorien aller Wörter oder Wortverbindungen abzuleiten, die dem Teilsatz im Rahmen der Grammatikregeln nachfolgen könnten, und um eine Auswahl zu treffen aus den gespeicherten Lexikonwörtern und/oder Wortverbindungen, die zu der oder jeder linguistischen Kategorie gehören, welche durch die Parser-Einrichtung abgeleitet worden ist, um das nächste Menü für eine Präsentation an die Bedienungsperson zu bilden,

   wobei die Mehrfachwort-Eingabe, die durch die Bedienungsperson vorgenommen wurde, dazu gezwungen wird einen Satz zu formen, der die Grammatikregeln der natürlichen Sprache befriedigt,

eine Einrichtung, um es der Bedienungsperson zu ermöglichen, eine Anzeige dahingehend einzugeben, daß die Wörter und/oder Wortverbindungen, die eingegeben worden sind, einen vollständigen Satz bilden, und

eine Einrichtung zum Übersetzen eines geparsten kompletten Satzes in einen Befehl, der von dem Computer ausführbar ist.

2. Computer nach Anspruch 1, **dadurch gekennzeichnet**, daß die Parser-Einrichtung durch aufeinanderfolgendes Anwenden irgendeiner der folgenden drei Parser-Verarbeitungsregeln arbeitet:
(i) wenn das Wort oder die Wortverbindung, das bzw. die sich zur Zeit am Beginn der Eingabekette befindet, von der linguistischen Kategorie ist, die von einer Grammatikregel als ein erster Bestandteil einer Kette gefordert wird, die eine grammatikalische Struktur definiert, so ist die grammatikalische Struktur, die durch die Grammatikregel definiert ist, abzuspeichern, es ist das Wort oder die Wortverbindung aus der Eingabekette zu entfernen und mit der grammatikalischen Struktur, die durch die Grammatikregel definiert ist, zu verketten, und es ist die nächste linguistische Kategorie zu speichern, die von der Grammatikregel dahingehend gefordert wird, daß sie dem Wort oder der Wortverbindung, die aus der Eingabekette entfernt wurde, zu folgen hat;
(ii) wenn eine vollständige Kette von linguistischen Kategorien, die durch eine Grammatikregel, welche eine grammatikalische Struktur definiert, gefordert werden, in den Wörtern und in der Eingabekette gefunden wird, so ist die grammatikalische Struktur, die in dieser Weise in der Eingabekette geformt ist, anstelle der Wörter zu speichern, die dazu verwendet werden, um die Struktur zu bilden;
(iii) wenn die linguistische Kategorie des Wortes oder der Wortverbindung, die sich zur Zeit am Beginn der Eingabekette befindet, die gleiche ist wie die zuletzt gespeicherte nächste linguistische Kategorie, die durch die Grammatikregel gefordert wird, die unter Verwendung der Parser-Verarbeitungsregel (i) angewendet wird, so ist das Wort oder die Wortverbindung aus der Eingabekette zu entfernen und die zuletzt gespeicherte nächste linguistische Kategorie aus dem Speicher zurückzuholen, und es ist das entfernte Wort oder die entfernte Wortverbindung mit der grammatikalischen Struktur zu verketten, die zuletzt durch die Anwendung der Parser-Verarbeitungsregel (i) gespeichert worden ist; und daß

dann, wenn die Eingabekette unvollständig ist und alle bis zu diesem Zeitpunkt eingegebenen Wörter mit einer oder mit mehreren grammatikalischen Strukturen verkettet worden sind, die zuletzt gespeicherte nächste linguistische Kategorie, die unter Anwendung der Parser-Verarbeitungsregel (i) eingegeben worden ist, dazu verwendet wird, um Wörter oder Wortverbindungen auszuwählen, die in einem Menü für eine Repräsentation gegenüber der Bedienungsperson darzustellen sind,

wobei der Parser die Parser-Verarbeitungsregeln in allen möglichen Kombinationen unter Verwendung aller geeigneten grammatikalischen Regeln anwendet, um alle möglichen Parsing-Operations-Bahnen zu erkunden, wobei eine erfolgreiche Parsing-Operation dann erhalten wird, wenn alle Wörter der Eingabekette mit einer einzelnen grammatikalischen Struktur in der Form eines Satzes verkettet sind und eine nicht erfolgreiche Parsing-Operation durch Wörter der Eingabekette angezeigt wird, die nicht mit einer einzelnen grammatikalischen Struktur verkettet sind, und dadurch, daß keine Parsing-Verarbeitungsregein anwendbar sind.

3. Computer nach Anspruch 2, **dadurch gekennzeichnet**, daß der Parser auch weitere Verarbeitungsregeln verwendet, welche die Möglichkeit bieten, daß ein in der Eingabekette enthaltenes Wort dahingehend identifiziert wird, daß es zu einer ersten Anzahl von Wörtern oder Wortverbindungen gehört, von denen nur eines bzw. nur eine in einer Aufeinanderfolge von Wörtern in der Eingabekette erscheinen kann, oder zu einer zweiten Anzahl von Wörtern oder Wortverbindungen gehört, von denen irgendeine Zahl von Null an aufwärts in einer Aufeinanderfolge in der Eingabekette erscheinen kann.

4. Computer nach Anspruch 2 oder 3, **dadurch gekennzeichnet**, daß der Parser eine Erreichbarkeits-Matrix enthält, in der Anzeigen aufgezeichnet sind, ob die unterschiedlichen Parsing-Bahnen einer Eingabekette möglicherweise zu einer gültigen Parsing-Operation eines Satzes führen könnten oder nicht.

5. Computer nach Anspruch 2, 3 oder 4, **dadurch gekennzeichnet**, daß der Parser zwei Speicher-Stapel verwendet, wobei zu Beginn die Eingabekette in einem ersten Stapel gespeichert wird, so daß die Wörter der Eingabekette oben am Stapel in der Reihenfolge erscheinen, in welcher sie in der Kette auftreten, und wobei eine Repräsentation der grammatikalischen Struktur "Satz" in dem zweiten Stapel gespeichert wird, wobei die drei Parser-Verarbeitungsregeln dann die folgenden formalen Anweisungen beinhalten:
(i)

```
(V1 Y, X) abbilden auf (Y, V2 --- VntAX)
                                     |
                                     V1
```

worin die Grammatikregel lautet

A --- $V_1$ $V_2$ ... $V_n$, wobei die Buchstaben Wörter oder Wortverbindungen oder grammatikalische Strukturen wiedergeben, t ein Markierungssymbol ist und das Komma in den formalen Anweisungen den ersten Stapel von dem zweiten Stapel trennt.

(ii)

```
(X,tAX) abbilden auf (AX,Y)
   |                  |
   n                  n
```

(iii)

```
(BZ,BXYtQ) abbilden auf (Z,XYtQ)
 /\                          |
 P N                         B
                            /\
                           p  n
```

**6.** Computer nach irgendeinem der Ansprüche 2 bis 4, **dadurch gekennzeichnet**, daß der Parser drei Speicherstapel verwendet, wobei zu Beginn die Eingabekette in einem ersten Stapel derart gespeichert wird, daß die Wörter der Eingabekette oben in dem Stapel erscheinen und zwar in der Reihenfolge, in welcher sie in der Kette auftreten, und eine Repräsentation der grammatikatischen Struktur "Satz" in dem dritten Stapel gespeichert wird, wobei die drei Parser-Verarbeitungsregeln dann die folgenden formalen Anweisungen beinhalten:

(i)

```
(V1, X, Y) abbilden auf (0, V2...VntX, AY)
                                        |
                                        V1
```

wobei die Grammatikregel gleich ist A $V_1$ $V_2$...$V_n$, worin die Buchstaben Wörter, Wortverbindungen oder grammatikalische Strukturen wiedergeben, t ein Markierungssymbol ist und die Kommata in den formalen Anweisungen die Stapel trennen;

(ii) (X, t, A) abbilden auf (AX, 0, 0)

(iii)

```
(B, B, Y) abbilden auf (0, 0, Y)
 |                           / \
 X                           X B
```

## Revendications

1. Ordinateur ayant un système d'entrée à base de menus pour permettre à un opérateur de réaliser une entrée de plusieurs mots en sélectionnant et en introduisant alors des mots ou des locutions à partir de chacun d'une pluralité de menus présentés séquentiellement, les menus présentés après le premier menu étant déterminée par l'entrée ou les entrées sélectionnées effectuées dans au moins un menu précédent,

   caractérisé en ce que l'ordinateur comprend

   des moyens pour stocker un lexique contenant des mots et/ou des locutions pouvant être acceptés par l'ordinateur en même temps que différentes catégories linguistiques (par exemple, nom, locution, verbe intransitif, adjectif, adverbe, déterminant, etc.) auxquelles appartiennent les mots et/ou les locutions,

   des moyens pour stocker des représentations des règles de grammaire d'un sous-ensemble d'un langage naturel, les règles de grammaire définissant la formation appropriée de structures dans le langage naturel, composées des différentes catégories linguistiques, et

   des moyens d'analyse grammaticale répondant à la catégorie ou aux catégories linguistiques de l'un ou l'une, ou de chacun ou chacune, des mots ou locutions sélectionnés précédemment dans un menu et introduits et, quand plus d'un tel mot ou d'une telle locution a été introduit, à l'ordre dans lequel ont été introduits les mots et/ou locutions sélectionnés précédemment, afin d'analyser grammaticalement, en utilisant les règles de grammaire, la phrase partielle formée par le ou les mots et/ou la ou les locutions sélectionnés et introduits jusqu'à cet instant, l'analyse grammaticale étant effectuée chaque fois qu'un mot ou une locution sont ajoutés à la phrase partielle et de toutes les manières qui sont valides dans le cadre des règles de grammaire, les moyens d'analyse grammaticale étant disposés pour extraire de l'analyse grammaticale d'une phrase partielle les catégories linguistiques de tous les mots ou locutions qui pourraient suivre la phrase partielle dans le cadre des règles de grammaire, et pour sélectionner dans le lexique stocké des mots et/ou locutions appartenant à la ou à chaque catégorie linguistique extraite par les moyens d'analyse grammaticale, afin de former le menu suivant pour une présentation à l'opérateur,

   au moyen de quoi l'entrée à mots multiples effectuée par l'opérateur est contrainte de former une phrase satisfaisant aux règles de grammaire du langage naturel,

   des moyens pour permettre à l'opérateur d'introduire une indication que les mots et/ou locutions qui ont été introduits forment une phrase complète,

   et des moyens pour traduire une phrase complète analysée grammaticalement en une commande exécutable par l'ordinateur.

2. Ordinateur selon la revendication 1, caractérisé en ce que les moyens d'analyse grammaticale fonctionnent en appliquant successivement l'une quelconque des trois règles suivantes de traitement par l'analyseur grammatical :

   (i) si le mot ou la locution présentement au début de la chaîne d'entrée est de la catégorie linguistique exigée par une règle de grammaire comme premier élément d'une chaîne définissant une structure grammaticale, stocker alors la structure grammaticale définie par la règle de grammaire, retirer le mot ou la locution de la chaîne d'entrée et le ou la lier à la structure grammaticale définie par la règle de grammaire, et stocker la catégorie linguistique suivante dont la règle de grammaire exige qu'elle suive le mot ou la locution retiré(e) de la chaîne d'entrée ;

   (ii) si une chaîne complète de catégories linguistiques exigées par une règle de grammaire définissant une structure grammaticale est trouvée dans les mots de la chaîne d'entrée, stocker alors la structure grammaticale ainsi formée dans la chaîne d'entrée au lieu des mots utilisés pour former la structure ;

   (iii) si la catégorie linguistique du mot ou de la locution présentement au début de la chaîne d'entrée est la même que la catégorie linguistique suivante stockée le plus récemment exigée par la règle de grammaire appliquée en utilisant la règle (i) d'analyse grammaticale, retirer alors le mot ou la locution de la chaîne d'entrée et rechercher dans la mémoire la catégorie linguistique suivante stockée le plus récemment, et lier le mot ou la locution retiré(e) de la structure grammaticale stockée le plus récemment par l'application de la règle (i) d'analyse grammaticale ; et en ce que

   quand la chaîne d'entrée est incomplète et que tout les mots introduits jusqu'à l'instant présent ont été liés à une ou plusieurs structures grammaticales, alors la catégorie linguistique suivante stockée le plus récemment introduite en utilisant la règle (i) d'analyse grammaticale est utilisée pour sélectionner des mots ou des locutions à afficher sur un menu pour une présentation à l'opérateur,

   l'analyseur grammatical appliquant les règles d'analyse grammaticale dans toutes les combinaisons possibles utilisant toutes les règles appropriées de grammaire afin d'explorer tous les chemins possibles d'analyse grammaticale, une analyse grammaticale réussie étant obtenue quand tous les mots de la chaîne d'entrée sont liés à une structure grammaticale unique sous la forme d'une phrase, et une analyse grammaticale infructueuse étant indiquée par des mots de la chaîne d'entrée non liés à une structure grammaticale unique et par une absence de règles applicables d'analyse grammaticale.

3. Ordinateur selon la revendication 2, caractérisé en ce que l'analyseur grammatical utilise des règles supplémentaires de traitement permettant à un mot dans la chaîne d'entrée d'être identifié comme appartenant à une première pluralité de mots ou locutions dont un seulement peut apparaître dans une séquence de mots dans la chaîne d'entrée, ou comme appartenant à une deuxième pluralité de mots ou locutions dont un nombre quelconque à partir de zéro peut apparaître en séquence dans la chaîne d'entrée.

4. Ordinateur selon la revendication 2 ou 3, caractérisé en ce que l'analyseur grammatical comprend une matrice d'accessibilité dans laquelle sont enregistrées des informations indiquant si les différents chemins d'analyse grammaticale d'une chaîne d'entrée pourraient ou non conduire à une analyse grammaticale valide d'une phrase.

5. Ordinateur selon la revendication 2, 3 ou 4 caractérisé en ce que l'analyseur grammatical utilise deux piles de mémoire, la chaîne d'entrée étant stockée initialement dans une première pile de sorte que les mots de la chaîne d'entrée apparaissent au sommet de la pile dans l'ordre dans lequel ils se présentent dans la chaîne, et une représentation de la structure grammaticale "phrase" étant stockée dans la deuxième pile, les trois règles de traitement de l'analyseur grammaticale ayant alors l'énoncé formel suivante :

(i)

$$(V_1Y,\ X)\ \text{donne}\ (Y,\ V_2\ ---\ V_n t\underset{\substack{|\\ V_1}}{A}X)$$

dans lequel la règle de grammaire est

$A --- V_1V_2 \ldots V_n$, les lettres représentent des mots ou des locutions ou des structures grammaticales, t est un symbole de marquage et la virgule dans les énoncés formels sépare la première pile de la deuxième.

(ii)

$$(X,t\underset{\substack{|\\ n}}{A}Y)\ \text{donne}\ (\underset{\substack{|\\ n}}{A}X,Y)$$

(iii)

$$(\underset{\substack{/\ \backslash\\ P\ \ N}}{B}Z,\ BXYtQ)\ \text{donne}\ (Z,XYt\underset{\substack{|\\ B\\ /\ \backslash\\ p\ \ n}}{Q})$$

6. Ordinateur selon une quelconque des revendications 2 à 4, caractérisé en ce que l'analyseur grammatical utilise trois piles de mémoire, initialement la chaîne d'entrée étant stockée dans une première pile de sorte que les mots de la chaîne d'entrée apparaissent au sommet de la pile dans l'ordre dans lequel ils se présentent dans la chaîne et une représentation de la structure grammaticale "phrase" est stockée dans la troisième pile, les trois règles de traitement par le processeur grammatical ayant alors les énoncés formels suivants :

(i)

$$(\ V_1X,Y\ )\ \text{donne}\ (0,\ V_2\ \ldots\ V_ntX,\underset{\substack{|\\ V_1}}{A}Y)$$

dans lequel la règle de grammaire est

$AV_1V_2 \ldots V_n$, les lettres représentent des mots, des locutions ou des structures grammaticales, t est un symbole de marquage et les virgules dans les énoncés formels séparent les piles ;

(ii) (X, t, A) donne (AX, 0, 0)

(iii)

```
(B, B, Y)  donne (0, 0, Y)
 |                    / \
 X                   X   B
```

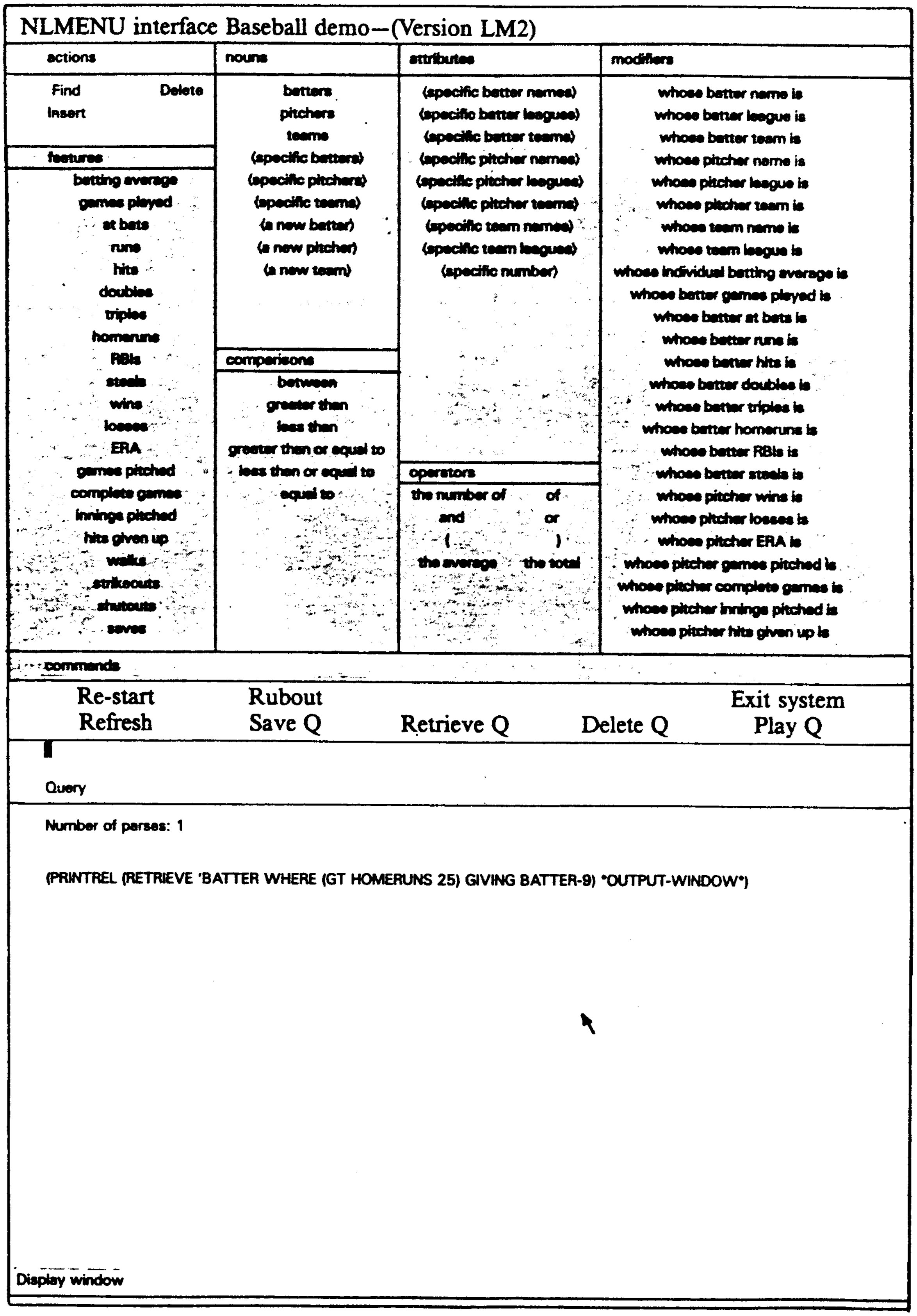
NLMENU interface Baseball demo—(Version LM2)
actions
Find
Delete
Insert
features
batting average
games played
at bats
runs
hits
doubles
triples
homeruns
RBIs
steals
wins
losses
ERA
games pitched
complete games
innings pitched
hits given up
walks
strikeouts
shutouts
saves
nouns
batters
pitchers
teams
(specific batters)
(specific pitchers)
(specific teams)
(a new batter)
(a new pitcher)
(a new team)
comparisons
between
greater than
less than
greater than or equal to
less than or equal to
equal to
attributes
(specific batter names)
(specific batter leagues)
(specific batter teams)
(specific pitcher names)
(specific pitcher leagues)
(specific pitcher teams)
(specific team names)
(specific team leagues)
(specific number)
operators
the number of
of
and
or
(
)
the average
the total
modifiers
whose batter name is
whose batter league is
whose batter team is
whose pitcher name is
whose pitcher league is
whose pitcher team is
whose team name is
whose team league is
whose individual batting average is
whose batter games played is
whose batter at bats is
whose batter runs is
whose batter hits is
whose batter doubles is
whose batter triples is
whose batter homeruns is
whose batter RBIs is
whose batter steals is
whose pitcher wins is
whose pitcher losses is
whose pitcher ERA is
whose pitcher games pitched is
whose pitcher complete games is
whose pitcher innings pitched is
whose pitcher hits given up is
commands
Re-start
Refresh
Rubout
Save Q
Retrieve Q
Delete Q
Exit system
Play Q
Query
Number of parses: 1
(PRINTREL (RETRIEVE 'BATTER WHERE (GT HOMERUNS 25) GIVING BATTER-9) 'OUTPUT-WINDOW')
Display window

*Fig. 1*

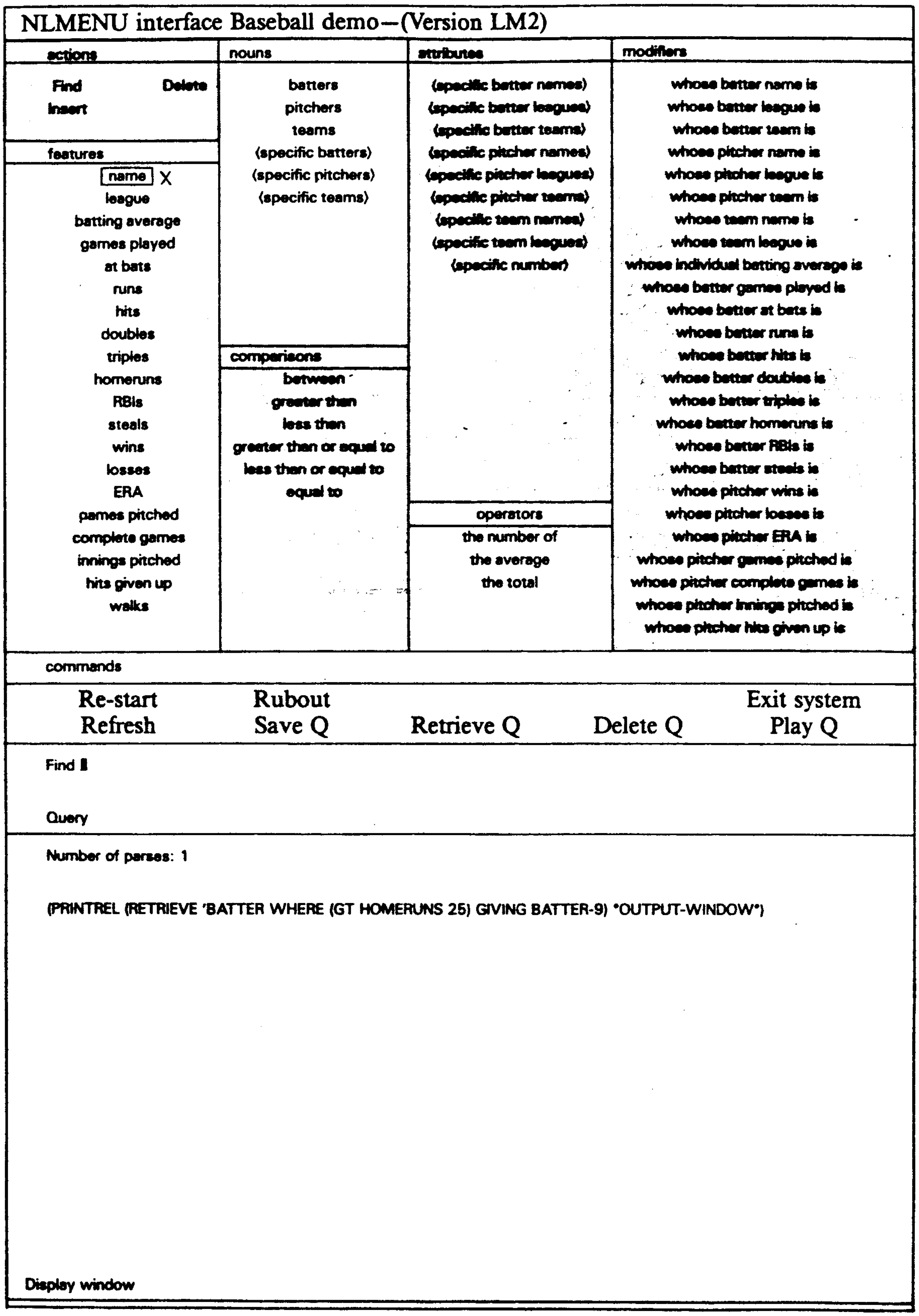
NLMENU interface Baseball demo—(Version LM2)
actions
Find
Delete
Insert
features
name X
league
batting average
games played
at bats
runs
hits
doubles
triples
homeruns
RBIs
steals
wins
losses
ERA
games pitched
complete games
innings pitched
hits given up
walks
nouns
batters
pitchers
teams
(specific batters)
(specific pitchers)
(specific teams)
comparisons
between
greater than
less than
greater than or equal to
less than or equal to
equal to
attributes
(specific batter names)
(specific batter leagues)
(specific batter teams)
(specific pitcher names)
(specific pitcher leagues)
(specific pitcher teams)
(specific team names)
(specific team leagues)
(specific number)
operators
the number of
the average
the total
modifiers
whose batter name is
whose batter league is
whose batter team is
whose pitcher name is
whose pitcher league is
whose pitcher team is
whose team name is
whose team league is
whose individual batting average is
whose batter games played is
whose batter at bats is
whose batter runs is
whose batter hits is
whose batter doubles is
whose batter triples is
whose batter homeruns is
whose batter RBIs is
whose batter steals is
whose pitcher wins is
whose pitcher losses is
whose pitcher ERA is
whose pitcher games pitched is
whose pitcher complete games is
whose pitcher innings pitched is
whose pitcher hits given up is
commands
Re-start
Refresh
Rubout
Save Q
Retrieve Q
Delete Q
Exit system
Play Q
Find
Query
Number of parses: 1
(PRINTREL (RETRIEVE 'BATTER WHERE (GT HOMERUNS 25) GIVING BATTER-9) 'OUTPUT-WINDOW')
Display window

*Fig.2*

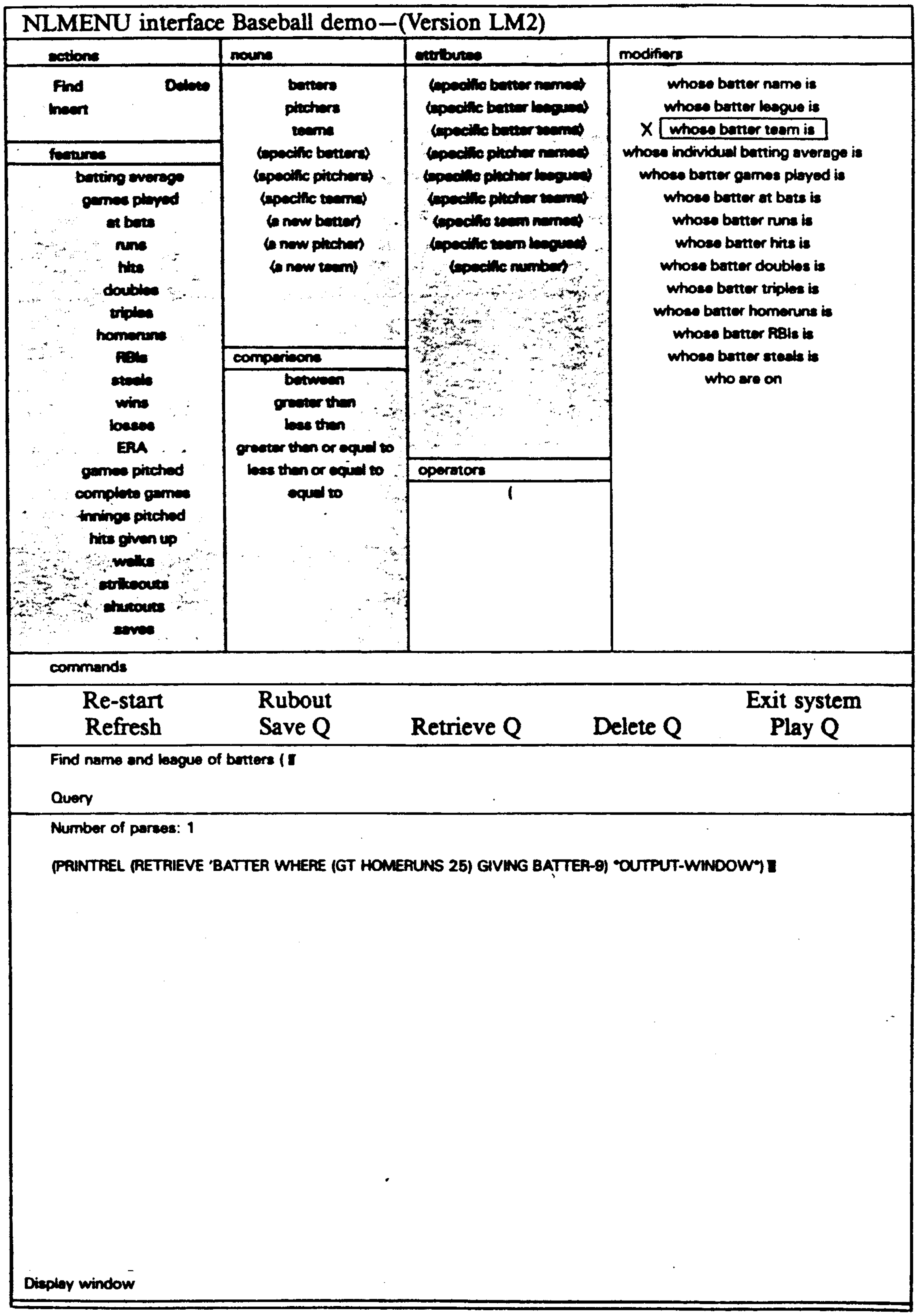
NLMENU interface Baseball demo—(Version LM2)
actions
Find
Delete
Insert
features
batting average
games played
at bats
runs
hits
doubles
triples
homeruns
RBIs
steals
wins
losses
ERA
games pitched
complete games
innings pitched
hits given up
walks
strikeouts
shutouts
saves
nouns
batters
pitchers
teams
(specific batters)
(specific pitchers)
(specific teams)
(a new batter)
(a new pitcher)
(a new team)
comparisons
between
greater than
less than
greater than or equal to
less than or equal to
equal to
attributes
(specific batter names)
(specific batter leagues)
(specific batter teams)
(specific pitcher names)
(specific pitcher leagues)
(specific pitcher teams)
(specific team names)
(specific team leagues)
(specific number)
operators
(
modifiers
whose batter name is
whose batter league is
X whose batter team is
whose individual batting average is
whose batter games played is
whose batter at bats is
whose batter runs is
whose batter hits is
whose batter doubles is
whose batter triples is
whose batter homeruns is
whose batter RBIs is
whose batter steals is
who are on
commands
Re-start
Refresh
Rubout
Save Q
Retrieve Q
Delete Q
Exit system
Play Q
Find name and league of batters (
Query
Number of parses: 1
(PRINTREL (RETRIEVE 'BATTER WHERE (GT HOMERUNS 25) GIVING BATTER-9) *OUTPUT-WINDOW*)
Display window

Fig. 3

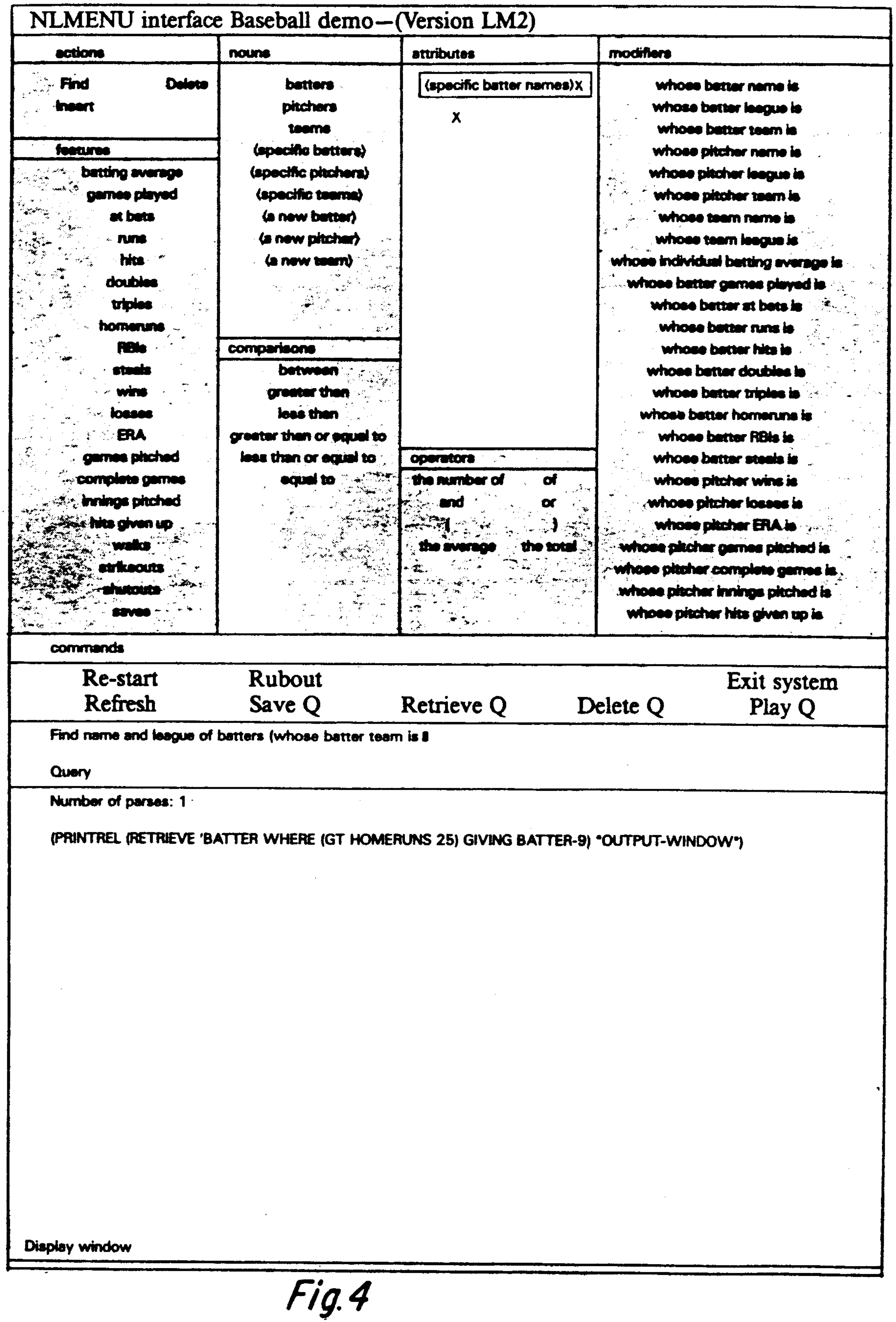
NLMENU interface Baseball demo—(Version LM2)
actions
Find
Delete
Insert
features
batting average
games played
at bats
runs
hits
doubles
triples
homeruns
RBIs
steals
wins
losses
ERA
games pitched
complete games
innings pitched
hits given up
walks
strikeouts
shutouts
saves
nouns
batters
pitchers
teams
(specific batters)
(specific pitchers)
(specific teams)
(a new batter)
(a new pitcher)
(a new team)
comparisons
between
greater than
less than
greater than or equal to
less than or equal to
equal to
attributes
(specific batter names) X
X
operators
the number of
of
and
or
(
)
the average
the total
modifiers
whose batter name is
whose batter league is
whose batter team is
whose pitcher name is
whose pitcher league is
whose pitcher team is
whose team name is
whose team league is
whose individual batting average is
whose batter games played is
whose batter at bats is
whose batter runs is
whose batter hits is
whose batter doubles is
whose batter triples is
whose batter homeruns is
whose batter RBIs is
whose batter steals is
whose pitcher wins is
whose pitcher losses is
whose pitcher ERA is
whose pitcher games pitched is
whose pitcher complete games is
whose pitcher innings pitched is
whose pitcher hits given up is
commands
Re-start
Rubout
Exit system
Refresh
Save Q
Retrieve Q
Delete Q
Play Q
Find name and league of batters (whose batter team is ▮
Query
Number of parses: 1
(PRINTREL (RETRIEVE 'BATTER WHERE (GT HOMERUNS 25) GIVING BATTER-9) *OUTPUT-WINDOW*)
Display window

*Fig. 4*

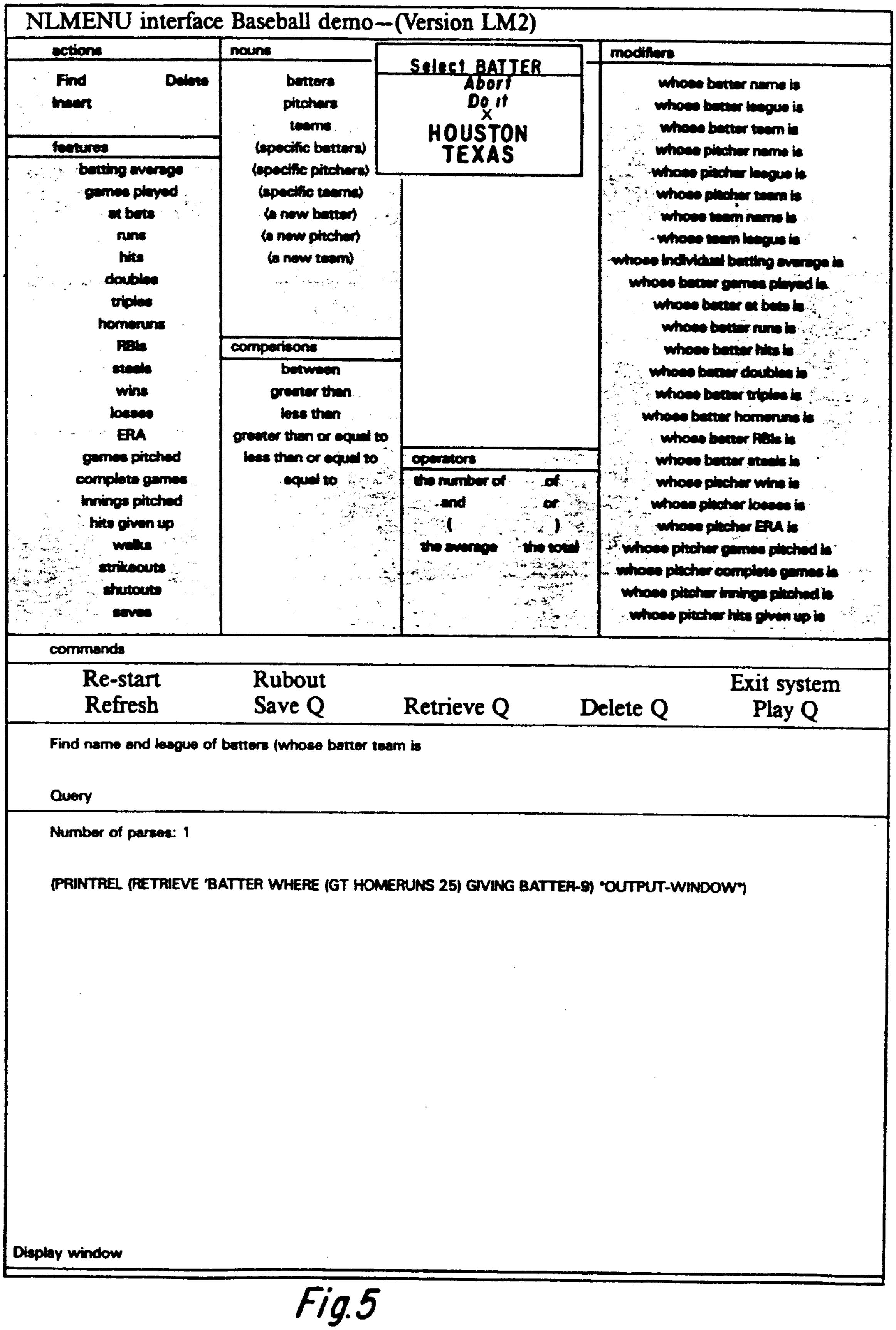
NLMENU interface Baseball demo—(Version LM2)
actions
Find
Delete
Insert
features
batting average
games played
at bats
runs
hits
doubles
triples
homeruns
RBIs
steals
wins
losses
ERA
games pitched
complete games
innings pitched
hits given up
walks
strikeouts
shutouts
saves
nouns
batters
pitchers
teams
(specific batters)
(specific pitchers)
(specific teams)
(a new batter)
(a new pitcher)
(a new team)
comparisons
between
greater than
less than
greater than or equal to
less than or equal to
equal to
Select BATTER
Abort
Do it
X
HOUSTON
TEXAS
operators
the number of
of
and
or
(
)
the average
the total
modifiers
whose batter name is
whose batter league is
whose batter team is
whose pitcher name is
whose pitcher league is
whose pitcher team is
whose team name is
whose team league is
whose individual batting average is
whose batter games played is
whose batter at bats is
whose batter runs is
whose batter hits is
whose batter doubles is
whose batter triples is
whose batter homeruns is
whose batter RBIs is
whose batter steals is
whose pitcher wins is
whose pitcher losses is
whose pitcher ERA is
whose pitcher games pitched is
whose pitcher complete games is
whose pitcher innings pitched is
whose pitcher hits given up is
commands
Re-start
Refresh
Rubout
Save Q
Retrieve Q
Delete Q
Exit system
Play Q
Find name and league of batters (whose batter team is
Query
Number of parses: 1
(PRINTREL (RETRIEVE 'BATTER WHERE (GT HOMERUNS 25) GIVING BATTER-9) 'OUTPUT-WINDOW')
Display window

*Fig.5*

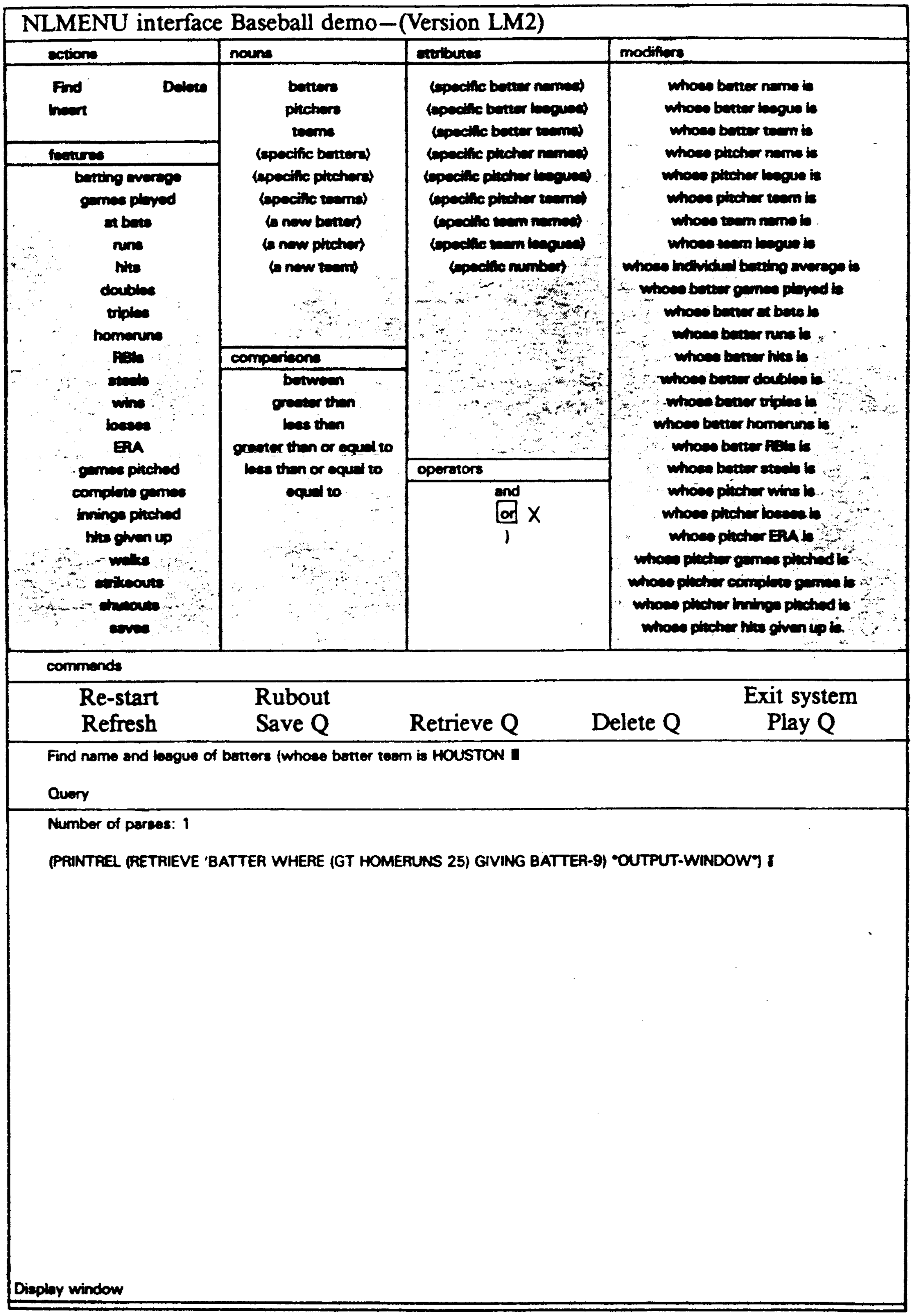
NLMENU interface Baseball demo—(Version LM2)
actions
Find
Delete
Insert
features
batting average
games played
at bats
runs
hits
doubles
triples
homeruns
RBIs
steals
wins
losses
ERA
games pitched
complete games
innings pitched
hits given up
walks
strikeouts
shutouts
saves
nouns
batters
pitchers
teams
(specific batters)
(specific pitchers)
(specific teams)
(a new batter)
(a new pitcher)
(a new team)
comparisons
between
greater than
less than
greater than or equal to
less than or equal to
equal to
attributes
(specific batter names)
(specific batter leagues)
(specific batter teams)
(specific pitcher names)
(specific pitcher leagues)
(specific pitcher teams)
(specific team names)
(specific team leagues)
(specific number)
operators
and
or X
)
modifiers
whose batter name is
whose batter league is
whose batter team is
whose pitcher name is
whose pitcher league is
whose pitcher team is
whose team name is
whose team league is
whose individual batting average is
whose batter games played is
whose batter at bats is
whose batter runs is
whose batter hits is
whose batter doubles is
whose batter triples is
whose batter homeruns is
whose batter RBIs is
whose batter steals is
whose pitcher wins is
whose pitcher losses is
whose pitcher ERA is
whose pitcher games pitched is
whose pitcher complete games is
whose pitcher innings pitched is
whose pitcher hits given up is
commands
Re-start
Refresh
Rubout
Save Q
Retrieve Q
Delete Q
Exit system
Play Q
Find name and league of batters (whose batter team is HOUSTON
Query
Number of parses: 1
(PRINTREL (RETRIEVE 'BATTER WHERE (GT HOMERUNS 25) GIVING BATTER-9) *OUTPUT-WINDOW*)
Display window

*Fig.6*

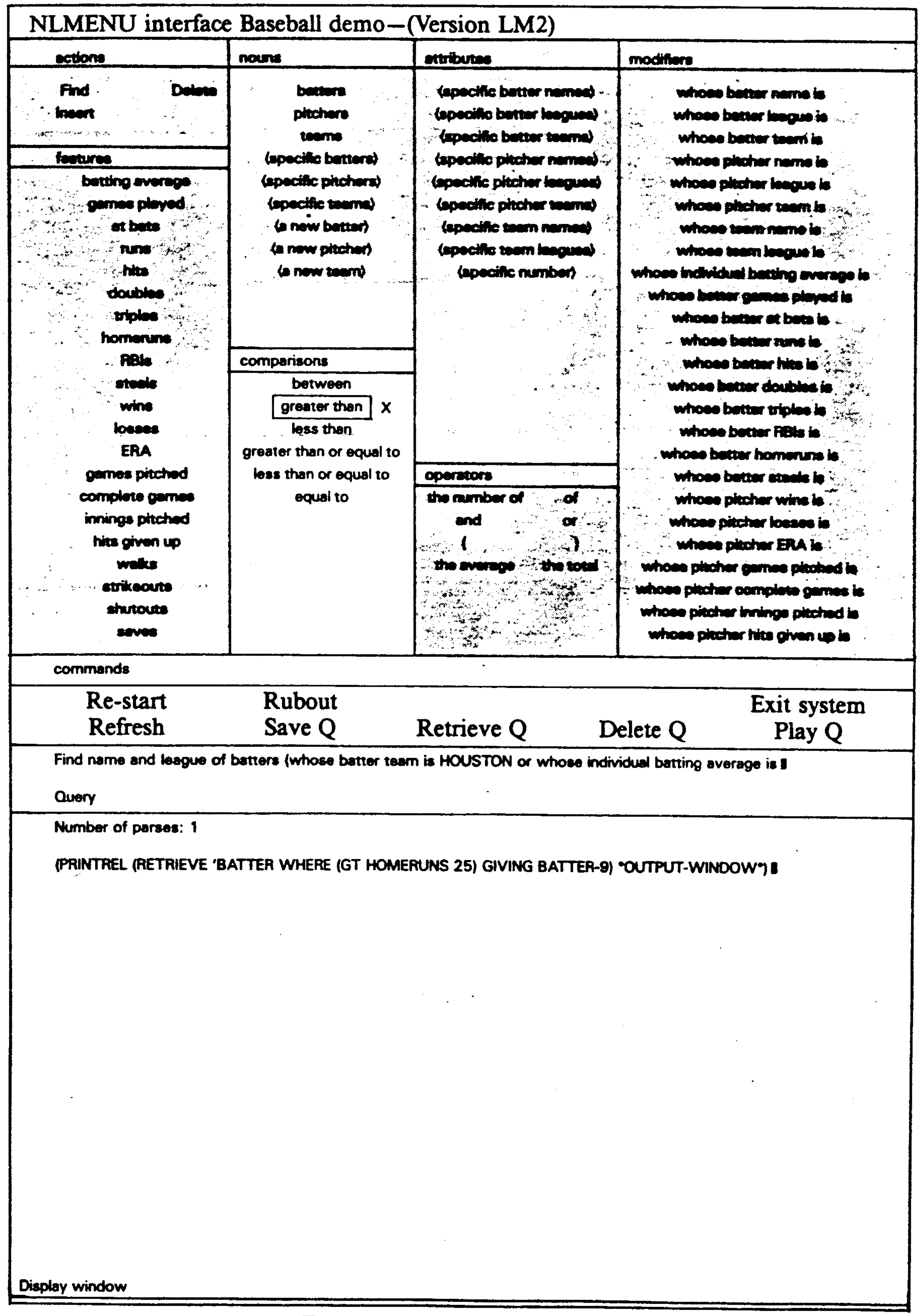
NLMENU interface Baseball demo—(Version LM2)
actions
Find
Delete
Insert
nouns
batters
pitchers
teams
(specific batters)
(specific pitchers)
(specific teams)
(a new batter)
(a new pitcher)
(a new team)
attributes
(specific batter names)
(specific batter leagues)
(specific batter teams)
(specific pitcher names)
(specific pitcher leagues)
(specific pitcher teams)
(specific team names)
(specific team leagues)
(specific number)
modifiers
whose batter name is
whose batter league is
whose batter team is
whose pitcher name is
whose pitcher league is
whose pitcher team is
whose team name is
whose team league is
whose individual batting average is
whose batter games played is
whose batter at bats is
whose batter runs is
whose batter hits is
whose batter doubles is
whose batter triples is
whose batter RBIs is
whose batter homeruns is
whose batter steals is
whose pitcher wins is
whose pitcher losses is
whose pitcher ERA is
whose pitcher games pitched is
whose pitcher complete games is
whose pitcher innings pitched is
whose pitcher hits given up is
features
batting average
games played
at bats
runs
hits
doubles
triples
homeruns
RBIs
steals
wins
losses
ERA
games pitched
complete games
innings pitched
hits given up
walks
strikeouts
shutouts
saves
comparisons
between
greater than
X
less than
greater than or equal to
less than or equal to
equal to
operators
the number of
of
and
or
(
,
)
the average
the total
commands
Re-start
Refresh
Rubout
Save Q
Retrieve Q
Delete Q
Exit system
Play Q
Find name and league of batters (whose batter team is HOUSTON or whose individual batting average is
Query
Number of parses: 1
(PRINTREL (RETRIEVE 'BATTER WHERE (GT HOMERUNS 25) GIVING BATTER-9) 'OUTPUT-WINDOW')
Display window

Fig.7

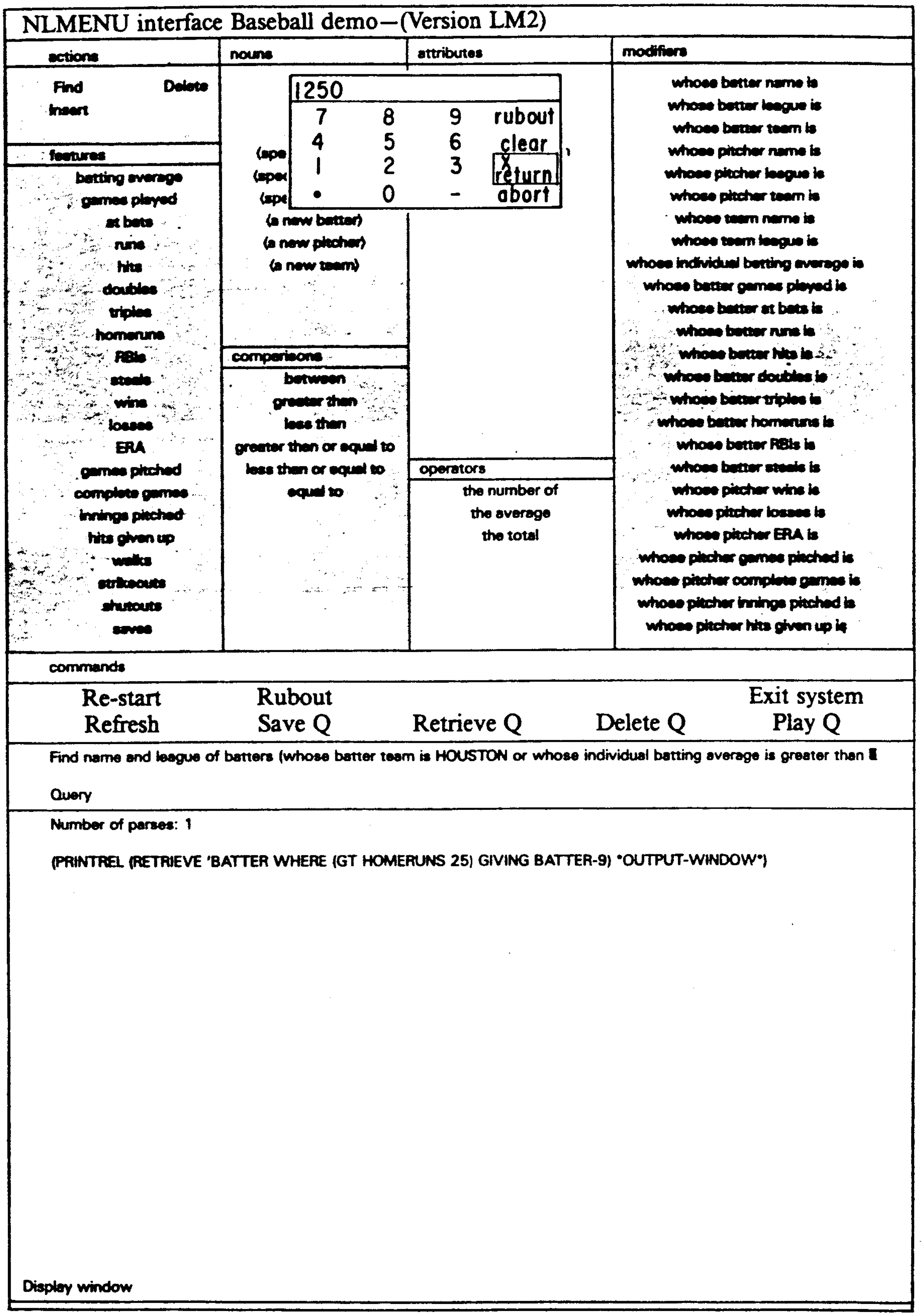
NLMENU interface Baseball demo—(Version LM2)
actions
Find
Delete
Insert
nouns
attributes
modifiers
1250
7 8 9 rubout
4 5 6 clear
1 2 3 return
• 0 - abort
(a new batter)
(a new pitcher)
(a new team)
features
batting average
games played
at bats
runs
hits
doubles
triples
homeruns
RBIs
steals
wins
losses
ERA
games pitched
complete games
innings pitched
hits given up
walks
strikeouts
shutouts
saves
comparisons
between
greater than
less than
greater than or equal to
less than or equal to
equal to
operators
the number of
the average
the total
whose batter name is
whose batter league is
whose batter team is
whose pitcher name is
whose pitcher league is
whose pitcher team is
whose team name is
whose team league is
whose individual batting average is
whose batter games played is
whose batter at bats is
whose batter runs is
whose batter hits is
whose batter doubles is
whose batter triples is
whose batter homeruns is
whose batter RBIs is
whose batter steals is
whose pitcher wins is
whose pitcher losses is
whose pitcher ERA is
whose pitcher games pitched is
whose pitcher complete games is
whose pitcher innings pitched is
whose pitcher hits given up is
commands
Re-start
Rubout
Exit system
Refresh
Save Q
Retrieve Q
Delete Q
Play Q
Find name and league of batters (whose batter team is HOUSTON or whose individual batting average is greater than
Query
Number of parses: 1
(PRINTREL (RETRIEVE 'BATTER WHERE (GT HOMERUNS 25) GIVING BATTER-9) 'OUTPUT-WINDOW')
Display window

*Fig.8*

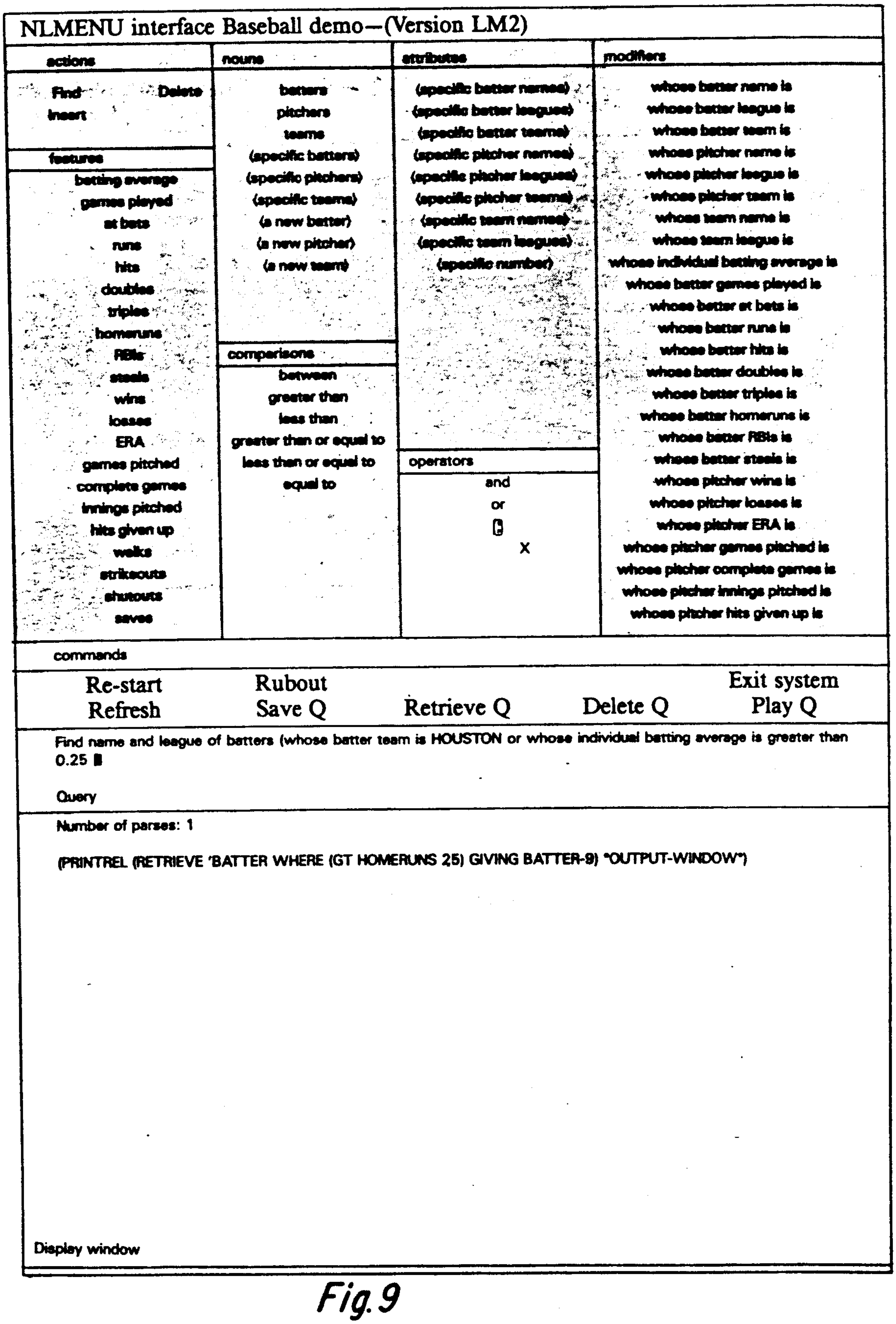
NLMENU interface Baseball demo—(Version LM2)
actions
Find
Delete
Insert
features
batting average
games played
at bats
runs
hits
doubles
triples
homeruns
RBIs
steals
wins
losses
ERA
games pitched
complete games
innings pitched
hits given up
walks
strikeouts
shutouts
saves
nouns
batters
pitchers
teams
(specific batters)
(specific pitchers)
(specific teams)
(a new batter)
(a new pitcher)
(a new team)
comparisons
between
greater than
less than
greater than or equal to
less than or equal to
equal to
attributes
(specific batter names)
(specific batter leagues)
(specific batter teams)
(specific pitcher names)
(specific pitcher leagues)
(specific pitcher teams)
(specific team names)
(specific team leagues)
(specific number)
operators
and
or
)
X
modifiers
whose batter name is
whose batter league is
whose batter team is
whose pitcher name is
whose pitcher league is
whose pitcher team is
whose team name is
whose team league is
whose individual batting average is
whose batter games played is
whose batter at bats is
whose batter runs is
whose batter hits is
whose batter doubles is
whose batter triples is
whose batter homeruns is
whose batter RBIs is
whose batter steals is
whose pitcher wins is
whose pitcher losses is
whose pitcher ERA is
whose pitcher games pitched is
whose pitcher complete games is
whose pitcher innings pitched is
whose pitcher hits given up is
commands
Re-start
Refresh
Rubout
Save Q
Retrieve Q
Delete Q
Exit system
Play Q
Find name and league of batters (whose batter team is HOUSTON or whose individual batting average is greater than 0.25
Query
Number of parses: 1
(PRINTREL (RETRIEVE 'BATTER WHERE (GT HOMERUNS 25) GIVING BATTER-9) "OUTPUT-WINDOW")
Display window

*Fig.9*

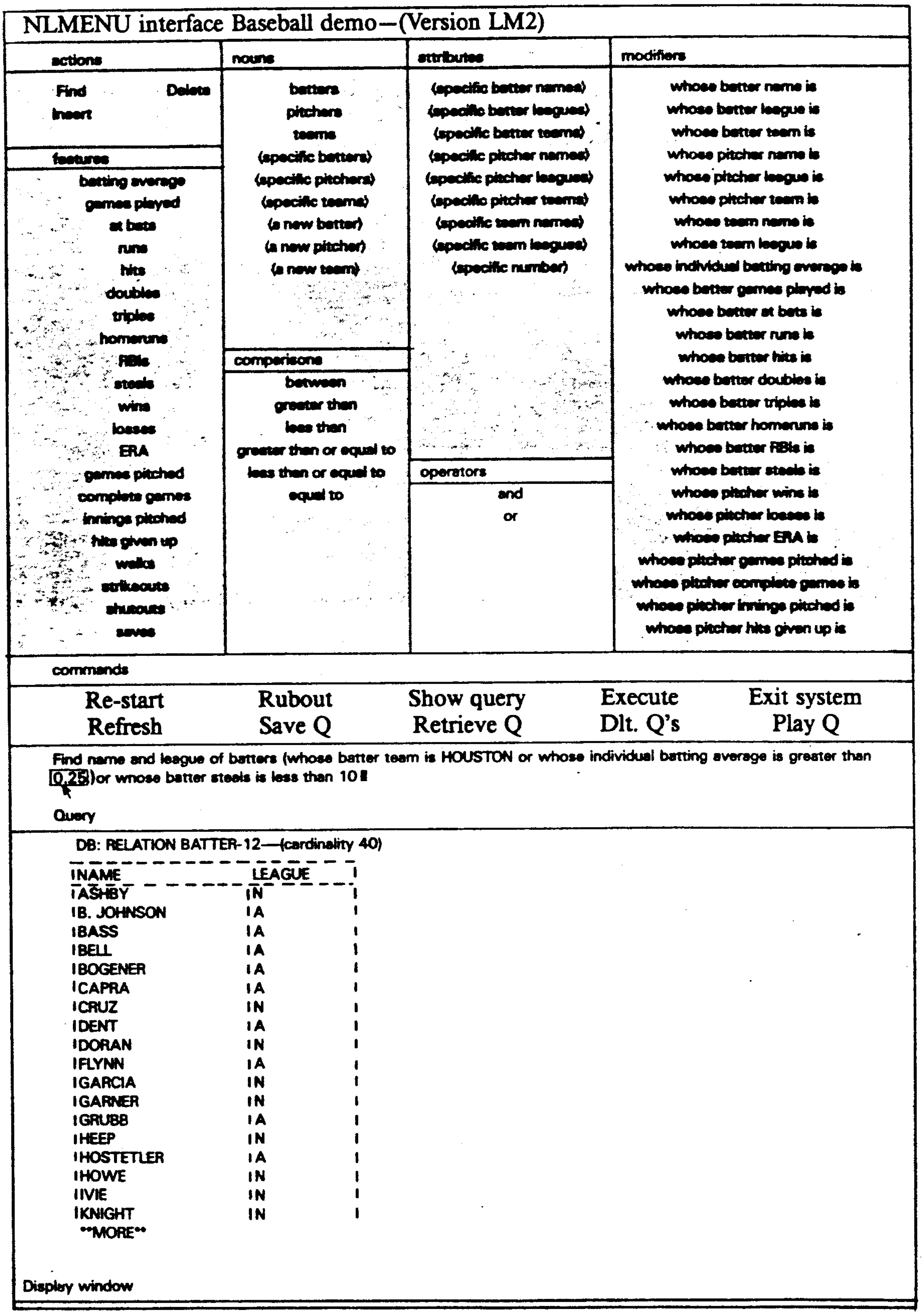
NLMENU interface Baseball demo—(Version LM2)
actions
Find
Delete
Insert
features
batting average
games played
at bats
runs
hits
doubles
triples
homeruns
RBIs
steals
wins
losses
ERA
games pitched
complete games
innings pitched
hits given up
walks
strikeouts
shutouts
saves
nouns
batters
pitchers
teams
(specific batters)
(specific pitchers)
(specific teams)
(a new batter)
(a new pitcher)
(a new team)
comparisons
between
greater than
less than
greater than or equal to
less than or equal to
equal to
attributes
(specific batter names)
(specific batter leagues)
(specific batter teams)
(specific pitcher names)
(specific pitcher leagues)
(specific pitcher teams)
(specific team names)
(specific team leagues)
(specific number)
operators
and
or
modifiers
whose batter name is
whose batter league is
whose batter team is
whose pitcher name is
whose pitcher league is
whose pitcher team is
whose team name is
whose team league is
whose individual batting average is
whose batter games played is
whose batter at bats is
whose batter runs is
whose batter hits is
whose batter doubles is
whose batter triples is
whose batter homeruns is
whose batter RBIs is
whose batter steals is
whose pitcher wins is
whose pitcher losses is
whose pitcher ERA is
whose pitcher games pitched is
whose pitcher complete games is
whose pitcher innings pitched is
whose pitcher hits given up is
commands
Re-start
Refresh
Rubout
Save Q
Show query
Retrieve Q
Execute
Dlt. Q's
Exit system
Play Q
Find name and league of batters (whose batter team is HOUSTON or whose individual batting average is greater than 0.25)or whose batter steals is less than 10
Query
DB: RELATION BATTER-12—(cardinality 40)
NAME LEAGUE
ASHBY N
B. JOHNSON A
BASS A
BELL A
BOGENER A
CAPRA A
CRUZ N
DENT A
DORAN N
FLYNN A
GARCIA N
GARNER N
GRUBB A
HEEP N
HOSTETLER A
HOWE N
IVIE N
KNIGHT N
**MORE**
Display window

*Fig.10*

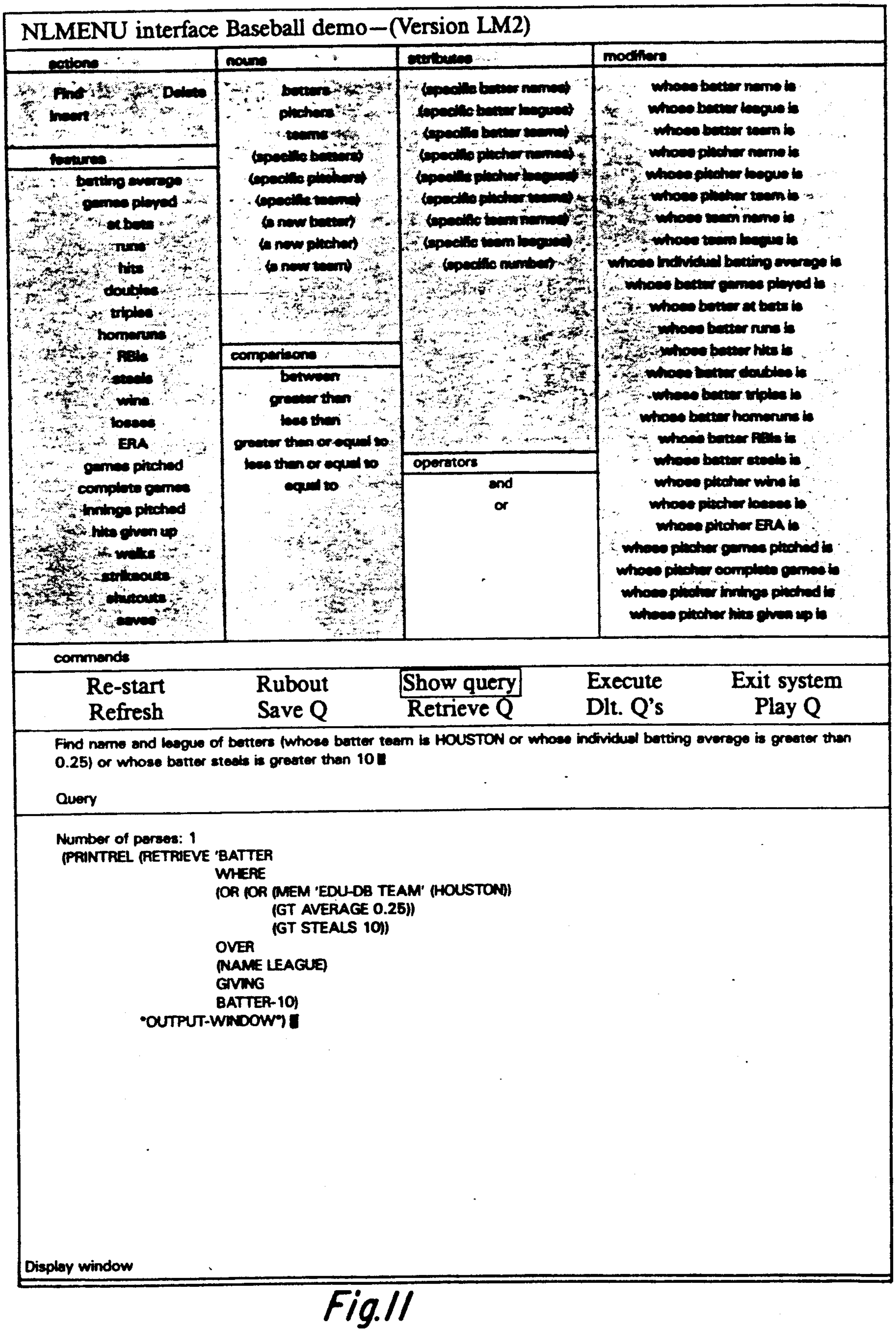
NLMENU interface Baseball demo—(Version LM2)
actions
Find
Delete
Insert
features
batting average
games played
at bats
runs
hits
doubles
triples
homeruns
RBIs
steals
wins
losses
ERA
games pitched
complete games
innings pitched
hits given up
walks
strikeouts
shutouts
saves
nouns
batters
pitchers
teams
(specific batters)
(specific pitchers)
(specific teams)
(a new batter)
(a new pitcher)
(a new team)
comparisons
between
greater than
less than
greater than or equal to
less than or equal to
equal to
attributes
(specific batter names)
(specific batter leagues)
(specific batter teams)
(specific pitcher names)
(specific pitcher leagues)
(specific pitcher teams)
(specific team names)
(specific team leagues)
(specific number)
operators
and
or
modifiers
whose batter name is
whose batter league is
whose batter team is
whose pitcher name is
whose pitcher league is
whose pitcher team is
whose team name is
whose team league is
whose individual batting average is
whose batter games played is
whose batter at bats is
whose batter runs is
whose batter hits is
whose batter doubles is
whose batter triples is
whose batter homeruns is
whose batter RBIs is
whose batter steals is
whose pitcher wins is
whose pitcher losses is
whose pitcher ERA is
whose pitcher games pitched is
whose pitcher complete games is
whose pitcher innings pitched is
whose pitcher hits given up is
commands
Re-start
Rubout
Show query
Execute
Exit system
Refresh
Save Q
Retrieve Q
Dlt. Q's
Play Q
Find name and league of batters (whose batter team is HOUSTON or whose individual batting average is greater than 0.25) or whose batter steals is greater than 10
Query
Number of parses: 1
(PRINTREL (RETRIEVE 'BATTER
WHERE
(OR (OR (MEM 'EDU-DB TEAM' (HOUSTON))
(GT AVERAGE 0.25))
(GT STEALS 10))
OVER
(NAME LEAGUE)
GIVING
BATTER-10)
*OUTPUT-WINDOW*)
Display window

Fig.11

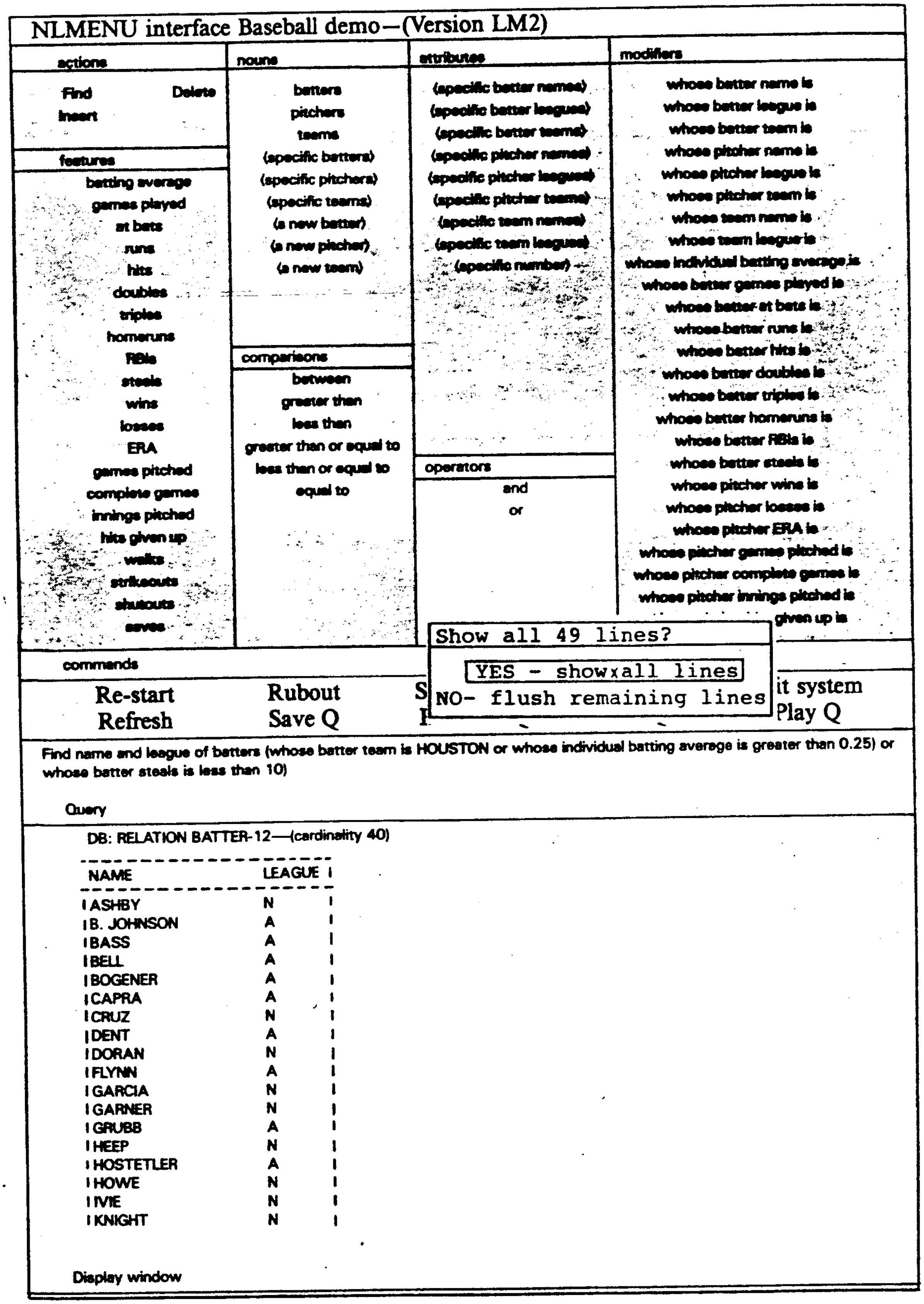
NLMENU interface Baseball demo—(Version LM2)
actions
Find
Delete
Insert
nouns
batters
pitchers
teams
(specific batters)
(specific pitchers)
(specific teams)
(a new batter)
(a new pitcher)
(a new team)
attributes
(specific batter names)
(specific batter leagues)
(specific batter teams)
(specific pitcher names)
(specific pitcher leagues)
(specific pitcher teams)
(specific team names)
(specific team leagues)
(specific number)
modifiers
whose batter name is
whose batter league is
whose batter team is
whose pitcher name is
whose pitcher league is
whose pitcher team is
whose team name is
whose team league is
whose individual batting average is
whose batter games played is
whose batter at bats is
whose batter runs is
whose batter hits is
whose batter doubles is
whose batter triples is
whose batter homeruns is
whose batter RBIs is
whose batter steals is
whose pitcher wins is
whose pitcher losses is
whose pitcher ERA is
whose pitcher games pitched is
whose pitcher complete games is
whose pitcher innings pitched is
given up is
features
batting average
games played
at bats
runs
hits
doubles
triples
homeruns
RBIs
steals
wins
losses
ERA
games pitched
complete games
innings pitched
hits given up
walks
strikeouts
shutouts
saves
comparisons
between
greater than
less than
greater than or equal to
less than or equal to
equal to
operators
and
or
Show all 49 lines?
YES - show all lines
NO- flush remaining lines
commands
Re-start
Refresh
Rubout
Save Q
it system
Play Q
Find name and league of batters (whose batter team is HOUSTON or whose individual batting average is greater than 0.25) or whose batter steals is less than 10)
Query
DB: RELATION BATTER-12—(cardinality 40)
NAME
LEAGUE
ASHBY N
B. JOHNSON A
BASS A
BELL A
BOGENER A
CAPRA A
CRUZ N
DENT A
DORAN N
FLYNN A
GARCIA N
GARNER N
GRUBB A
HEEP N
HOSTETLER A
HOWE N
IVIE N
KNIGHT N
Display window

Fig.12

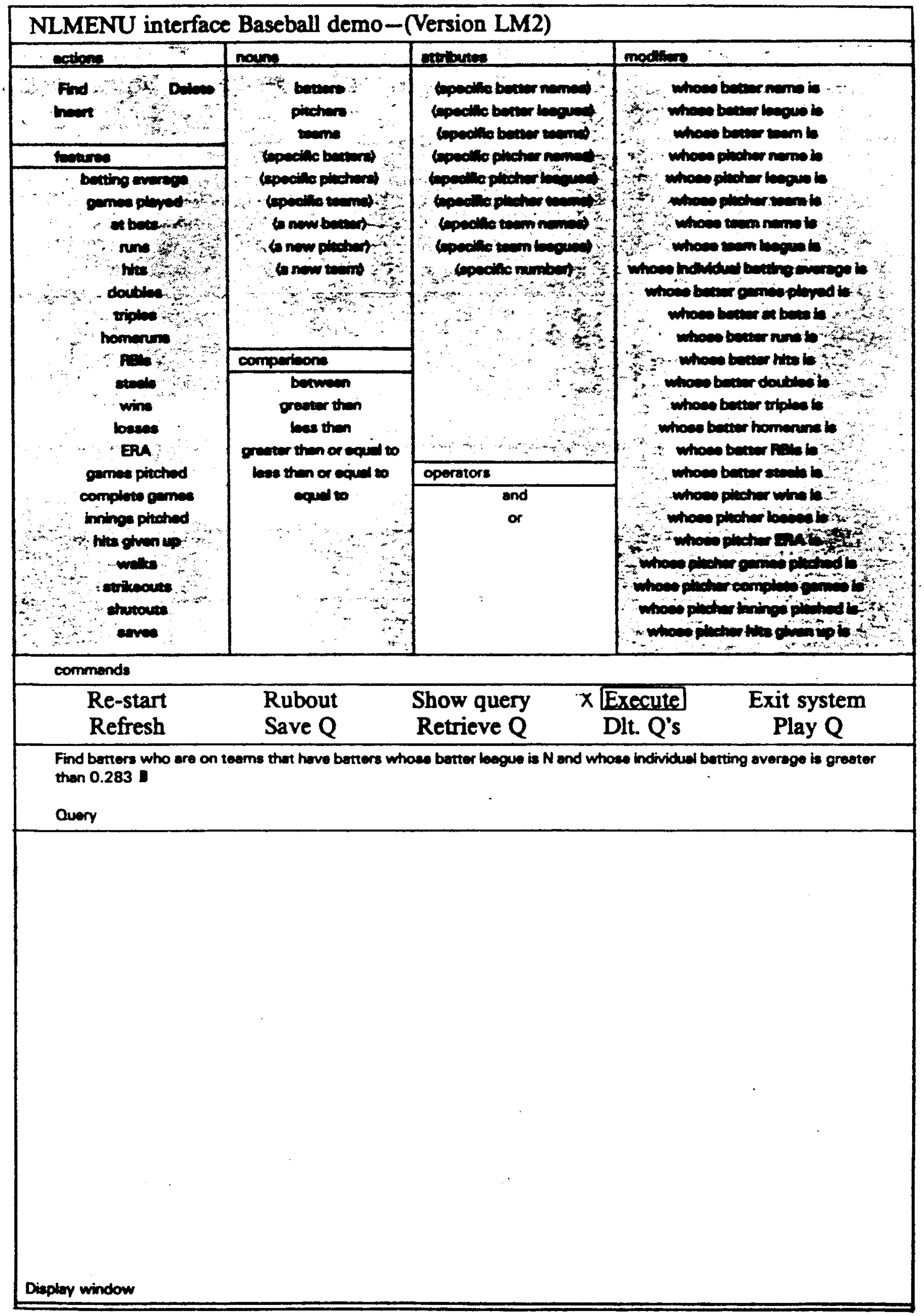
NLMENU interface Baseball demo—(Version LM2)
actions
Find
Delete
Insert
features
batting average
games played
at bats
runs
hits
doubles
triples
homeruns
RBIs
steals
wins
losses
ERA
games pitched
complete games
innings pitched
hits given up
walks
strikeouts
shutouts
saves
nouns
batters
pitchers
teams
(specific batters)
(specific pitchers)
(specific teams)
(a new batter)
(a new pitcher)
(a new team)
comparisons
between
greater than
less than
greater than or equal to
less than or equal to
equal to
attributes
(specific batter names)
(specific batter leagues)
(specific batter teams)
(specific pitcher names)
(specific pitcher leagues)
(specific pitcher teams)
(specific team names)
(specific team leagues)
(specific number)
operators
and
or
modifiers
whose batter name is
whose batter league is
whose batter team is
whose pitcher name is
whose pitcher league is
whose pitcher team is
whose team name is
whose team league is
whose individual batting average is
whose batter games played is
whose batter at bats is
whose batter runs is
whose batter hits is
whose batter doubles is
whose batter triples is
whose batter homeruns is
whose batter RBIs is
whose batter steals is
whose pitcher wins is
whose pitcher losses is
whose pitcher ERA is
whose pitcher games pitched is
whose pitcher complete games is
whose pitcher innings pitched is
whose pitcher hits given up is
commands
Re-start
Rubout
Show query
X Execute
Exit system
Refresh
Save Q
Retrieve Q
Dlt. Q's
Play Q
Find batters who are on teams that have batters whose batter league is N and whose individual batting average is greater than 0.283
Query
Display window

Fig.13

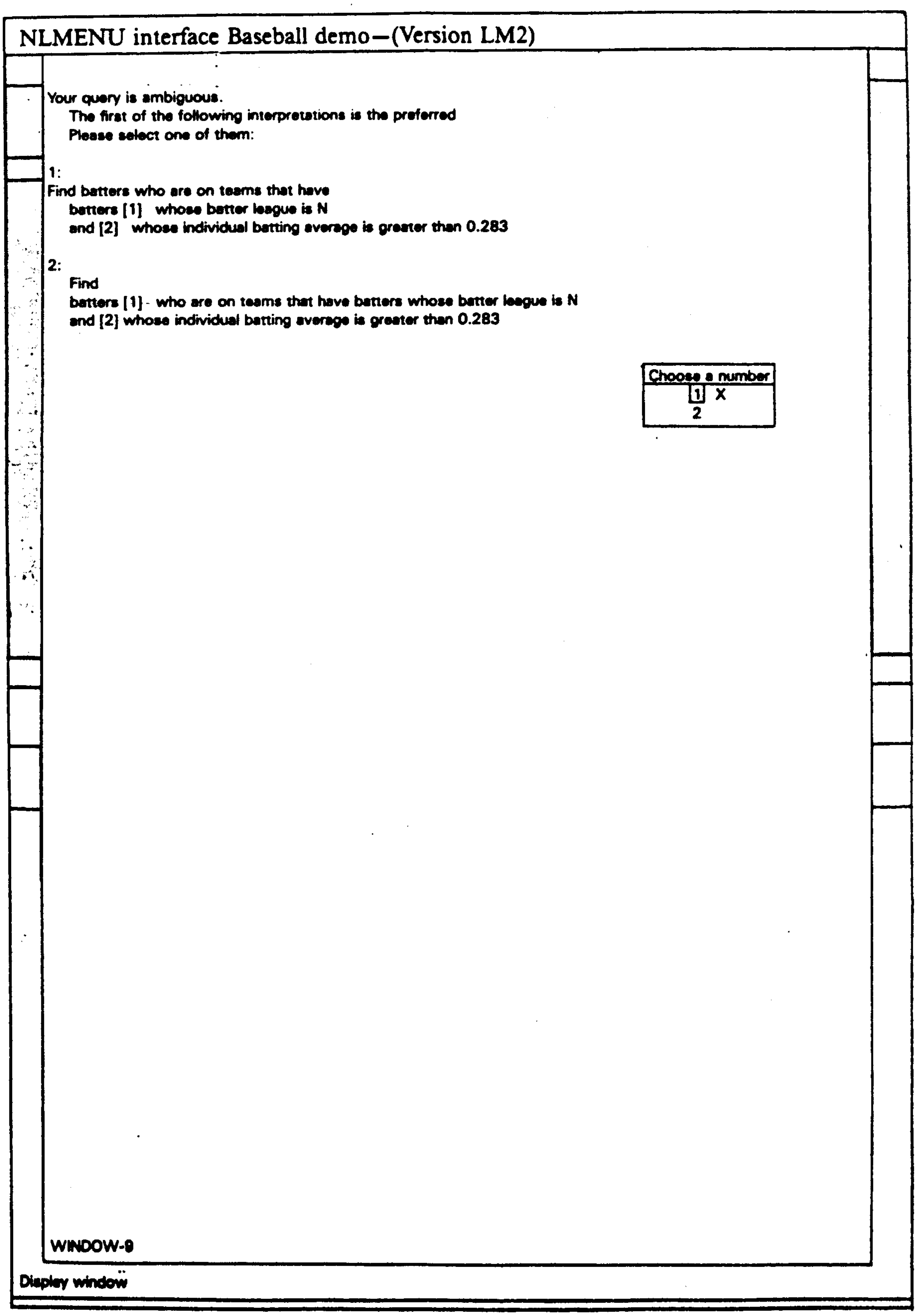
NLMENU interface Baseball demo—(Version LM2)
Your query is ambiguous.
The first of the following interpretations is the preferred
Please select one of them:
1:
Find batters who are on teams that have
batters [1] whose batter league is N
and [2] whose individual batting average is greater than 0.283
2:
Find
batters [1] - who are on teams that have batters whose batter league is N
and [2] whose individual batting average is greater than 0.283
Choose a number
1 X
2
WINDOW-9
Display window

Fig. 14

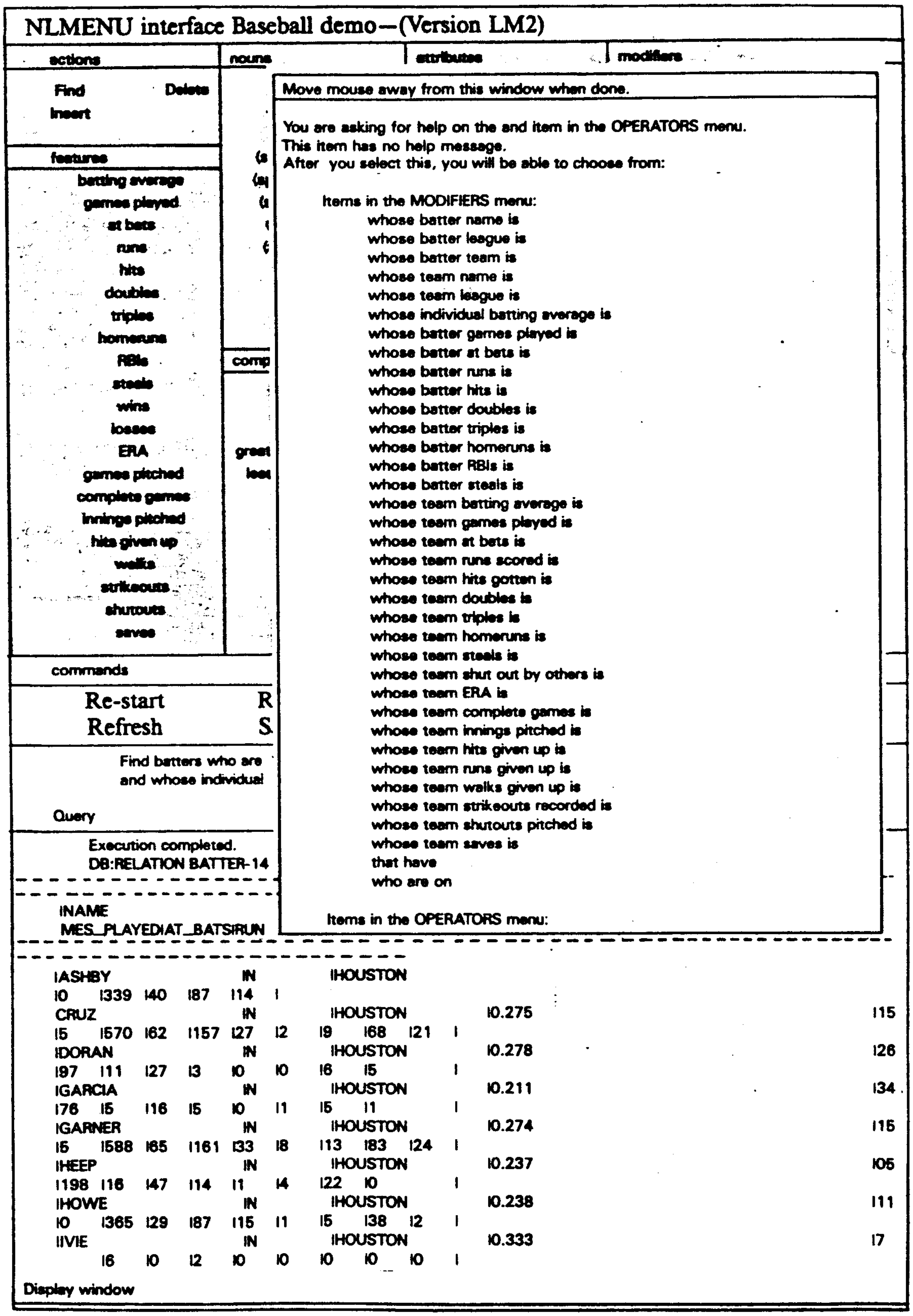
NLMENU interface Baseball demo—(Version LM2)
actions
nouns
attributes
modifiers
Find
Delete
Insert
features
batting average
games played
at bats
runs
hits
doubles
triples
homeruns
RBIs
steals
wins
losses
ERA
games pitched
complete games
innings pitched
hits given up
walks
strikeouts
shutouts
saves
comp
great
leas
Move mouse away from this window when done.
You are asking for help on the and item in the OPERATORS menu.
This item has no help message.
After you select this, you will be able to choose from:
Items in the MODIFIERS menu:
whose batter name is
whose batter league is
whose batter team is
whose team name is
whose team league is
whose individual batting average is
whose batter games played is
whose batter at bats is
whose batter runs is
whose batter hits is
whose batter doubles is
whose batter triples is
whose batter homeruns is
whose batter RBIs is
whose batter steals is
whose team batting average is
whose team games played is
whose team at bats is
whose team runs scored is
whose team hits gotten is
whose team doubles is
whose team triples is
whose team homeruns is
whose team steals is
whose team shut out by others is
whose team ERA is
whose team complete games is
whose team innings pitched is
whose team hits given up is
whose team runs given up is
whose team walks given up is
whose team strikeouts recorded is
whose team shutouts pitched is
whose team saves is
that have
who are on
Items in the OPERATORS menu:
commands
Re-start
Refresh
Find batters who are
and whose individual
Query
Execution completed.
DB:RELATION BATTER-14
INAME
MES_PLAYEDIAT_BATSIRUN
IASHBY IN IHOUSTON
I0 I339 I40 I87 I14 I
CRUZ IN IHOUSTON I0.275 I15
I5 I570 I62 I157 I27 I2 I9 I68 I21 I
IDORAN IN IHOUSTON I0.278 I26
I97 I11 I27 I3 I0 I0 I6 I5 I
IGARCIA IN IHOUSTON I0.211 I34
I76 I5 I16 I5 I0 I1 I5 I1 I
IGARNER IN IHOUSTON I0.274 I15
I5 I588 I65 I161 I33 I8 I13 I83 I24 I
IHEEP IN IHOUSTON I0.237 I05
I198 I16 I47 I14 I1 I4 I22 I0 I
IHOWE IN IHOUSTON I0.238 I11
I0 I365 I29 I87 I15 I1 I5 I38 I2 I
IIVIE IN IHOUSTON I0.333 I7
I6 I0 I2 I0 I0 I0 I0 I0 I
Display window

*Fig.15*

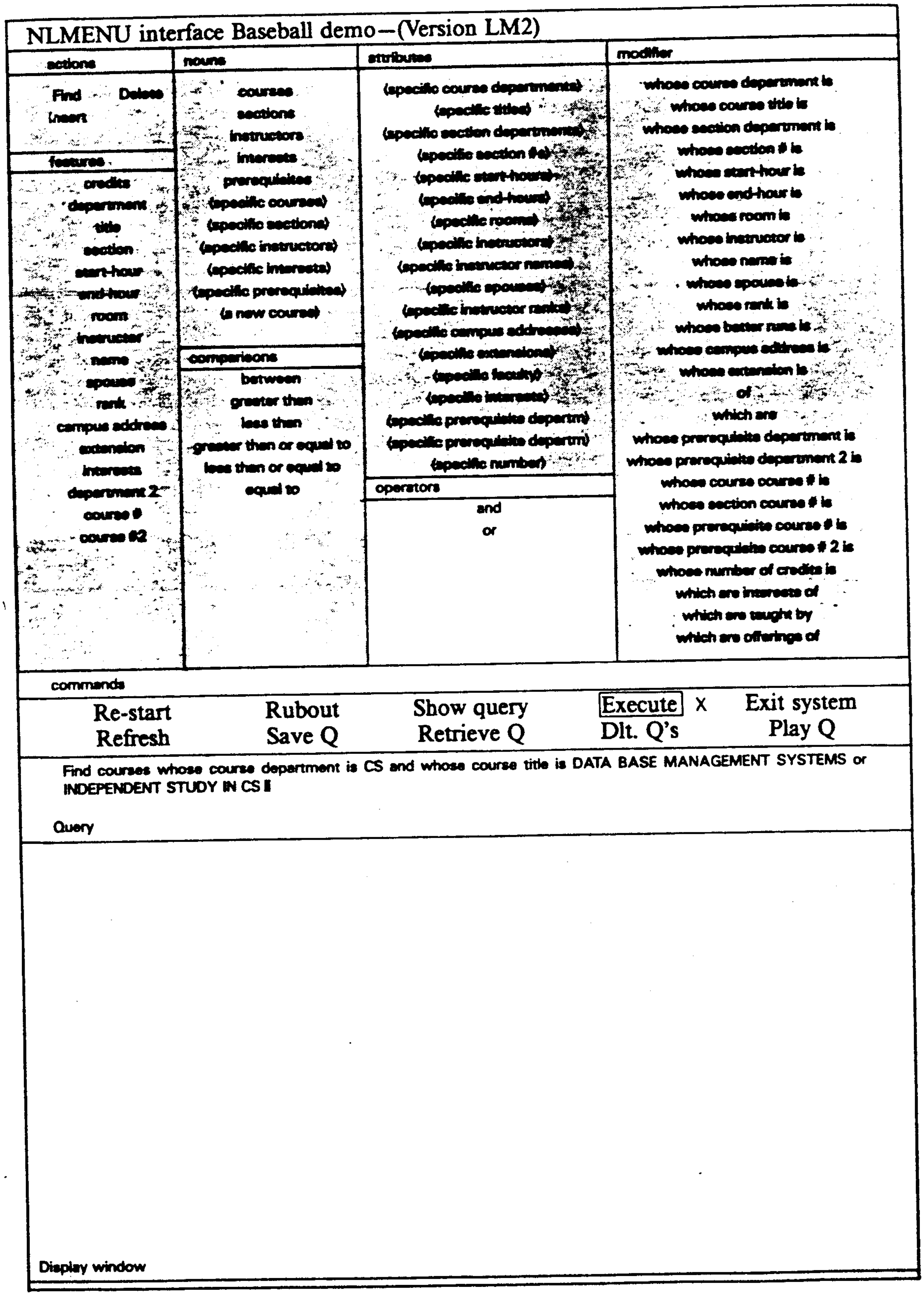
NLMENU interface Baseball demo—(Version LM2)
actions
Find
Delete
Insert
features
credits
department
title
section
start-hour
end-hour
room
instructor
name
spouse
rank
campus address
extension
interests
department 2
course #
course #2
nouns
courses
sections
instructors
interests
prerequisites
(specific courses)
(specific sections)
(specific instructors)
(specific interests)
(specific prerequisites)
(a new course)
comparisons
between
greater than
less than
greater than or equal to
less than or equal to
equal to
attributes
(specific course departments)
(specific titles)
(specific section departments)
(specific section #s)
(specific start-hours)
(specific end-hours)
(specific rooms)
(specific instructors)
(specific instructor names)
(specific spouses)
(specific instructor ranks)
(specific campus addresses)
(specific extensions)
(specific faculty)
(specific interests)
(specific prerequisite departm)
(specific prerequisite departm)
(specific number)
operators
and
or
modifier
whose course department is
whose course title is
whose section department is
whose section # is
whose start-hour is
whose end-hour is
whose room is
whose instructor is
whose name is
whose spouse is
whose rank is
whose better runs is
whose campus address is
whose extension is
of
which are
whose prerequisite department is
whose prerequisite department 2 is
whose course course # is
whose section course # is
whose prerequisite course # is
whose prerequisite course # 2 is
whose number of credits is
which are interests of
which are taught by
which are offerings of
commands
Re-start
Refresh
Rubout
Save Q
Show query
Retrieve Q
Execute
X
Dlt. Q's
Exit system
Play Q
Find courses whose course department is CS and whose course title is DATA BASE MANAGEMENT SYSTEMS or INDEPENDENT STUDY IN CS I
Query
Display window

*Fig.16*